# EUROPEAN PATENT SPECIFICATION

(11) **EP 4 346 505 B1**
(45) Date of publication and mention of the grant of the patent: **13.11.2024**
(21) Application number: 22726529.5
(22) Date of filing: 18.05.2022
(51) Int. Cl.: A47B 49/00, A47B 81/00, A47B 77/18, A47B 46/00, F16G 13/20

(54) **PULL-OUT UNIT**
AUSZUGSEINHEIT
UNITÉ D'EXTRACTION

(30) Priority: 24.05.2021 IT 202100013403
(43) Date of publication of application: 10.04.2024
(73) Proprietor: Pettarelli, Daniele, 62011 Cingoli (MC) (IT)
(72) Inventor: Pettarelli, Daniele, 62011 Cingoli (MC) (IT)
(74) Representative: Fermanelli, Marco
(86) International application number: PCT/IB2022/054624
(87) International publication number: WO 2022/248978

(56) References cited:
- WO-A2-2008/108654

## Description

### Technical field of the invention

The object of the present patent application for an industrial invention relates to a pull-out unit configured to be housed in a space of a containment body. In particular, the present invention refers to an improved pull-out unit generally for furniture or spaces.

Further, the present patent application refers to a system comprising two pull-out units and to an assembly such as, as said, a piece of furniture, comprising a containment body and a pull-out unit housed thereinto.

Moreover, the present patent application refers to a process of installing a pull-out unit in a space of a containment body.

Particularly, the present invention was devised for the field of corner kitchen furniture, wherein pull-out units for objects are installed to, however, as it is specifically described in the following, the invention lends itself to many other fields and applications.

It is noted from the beginning, that the term "objects" means garbage containers (waste bins) and also other objects such as bottle-holders, dish-racks or containers for office binders or also book holders or whatever object.

### Prior art

Pull-out units arranged inside a piece of furniture (an under-sink piece of furniture, for example) enabling to extract or retract objects from/into the space of the piece of furniture are actually known.

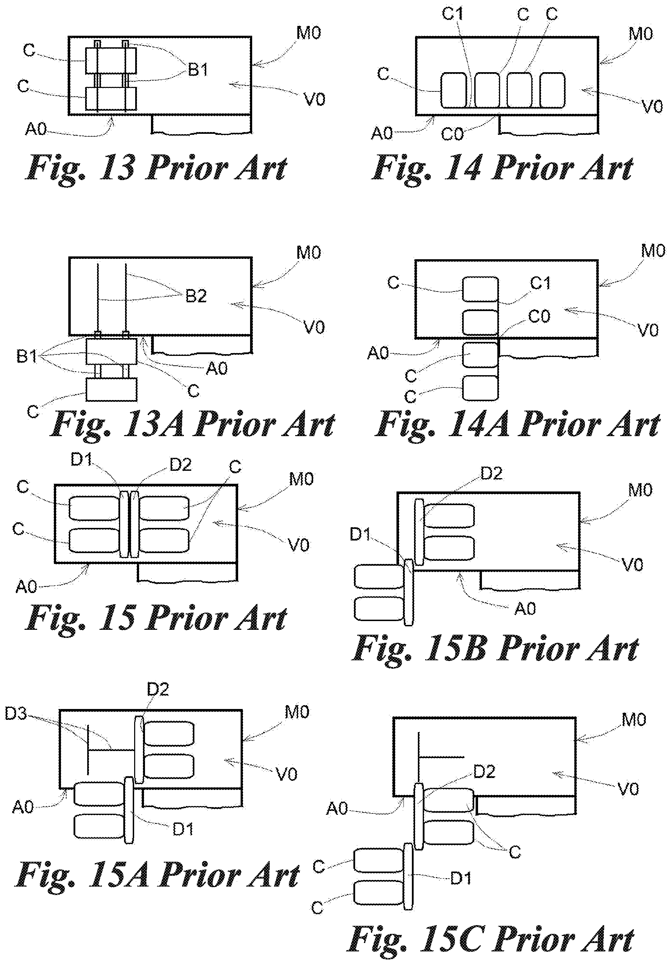

A known pull-out unit is shown in Figures 13 and 13A of the PRIOR ART.

A similar pull-out unit of the prior art comprises rectilinear guides (B2) mounted to the bottom wall of the piece of furniture and one or more sliders (B1) slidingly mounted to the guides (B2) which the objects (C), particularly garbage containers, are connected to.

Pulling or pushing the objects (C) (in other words the garbage containers) along an extraction direction (parallel to the guides (B2)) enables to extract or retract the objects from/into the space (V0) of the piece of furniture (M0).

The number of containers or objects, which can be mounted to the pull-out unit, depends on the depth of the piece of furniture (M0) and on the width of the access opening (A0) to the piece of furniture (M0).

Such pull-out unit is not suitable to be used inside of corner furniture, as specifically shown in the same Figures 13 and 13A, because it does not enable to completely exploit the space (V0) of the piece of furniture (M0). As a matter of fact the space (V0) comprises an unused hardly accessible volume which is arranged side-by-side the pull-out unit.

In order to be capable of also exploiting such hardly accessible volume, over the years new innovative solutions have been found.

For example, Figures 14 and 14A of the PRIOR ART show a first solution enabling to exploit also the previously cited hardly accessible volume.

The pull-out unit, shown in Figures 14 and 14A, comprises a revolving support (C11) carrying the objects (C) and which is revolvingly mounted on a vertical support pin (C0).

The revolving support (C11) can be rotated by 90° so that it can transition from a first position, shown in Figure 14, in which all the objects (C) are arranged inside the space (Va), to a second position, shown in Figure 14A in which the objects (C) are partially arranged outside the space (Va) and partially inside the space (V0).

If, from one side, a similar solution enables to be capable of exploiting also that volume portion of the hardly accessible space, from the other side, such solution exhibits issues with reference to the convenience of use. As a matter of fact, when the revolving support (C11) is in its second position, a user, in order to be capable of reaching the object (C) which is the most deeply positioned inside the space (Va) of the piece of furniture (M0), he/she will be required to bend his/her legs, bend his/her back and push himself/herself in the space (V0).

Such operation is uncomfortable, troublesome, and in the long run can also cause joint and muscular pains. Moreover, in case the objects (C) consist of the beforehand cited garbage containers, the action of pushing in the space (V0) is displeasing and unhygienic to the user.

Figures 15, 15A, 15B and 15C of the PRIOR ART show a further pull-out unit enabling to completely extract the objects (C) from the space (Va).

The pull-out unit, shown in the beforehand cited Figures 15, 15A, 15B, and 15C, comprises:
- a first support (D1) which, during the stowage step, is arranged in front of the access opening (A0) of the piece of furniture (M0); and
- a second support (D2) destined to be arranged, during the stowage step, side-by-side the first support (D1, in the above mentioned hardly accessible zone.

The first support (D1) is slidingly mounted with respect to the second support (D2) so that it can be moved from a side-by-side position to an advanced one with respect to the second support (D2).

The second support (D2), in turn, is slidingly mounted on guides (D3) enabling it to slide along two directions perpendicular to each other, in other words both parallel to the plane which the access opening (A0) lies on, and perpendicularly to said plane.

Starting from a condition in which both the supports (D1, D2) are arranged inside the space (V0) (see Figure 15), the extraction of both the supports (D1, D2) will require to sequentially perform the following steps:
- extracting the first support (D1) by making it slide with respect to the second support (D2), ad shown in Figures 15A;
- laterally moving both the supports (D1, D2) so that the second support (D2) will be located in front of the access opening (A0), as shown in Figure 15B;
- pulling both the supports (D1, D2) so that also the second support (D2) will protrude from the space (Va), as shown in Figure 15C.

Therefore, the above mentioned pull-out unit enables to be capable of completely extracting all the objects from the space (Va). However, such pull-out unit is extremely expensive and complicated to manufacture and moreover a user finds difficulties in moving it.

WO 2008/108654 A2 discloses a pull-out unit for pulling objects out from one space.

### Objects of the invention

An object of the present invention consists of overcoming the drawbacks of the prior art, by devising a pull-out unit enabling to exploit besides the depth also the width of a piece of furniture and which is simple to move.

A further object of the present invention consists of devising a pull-out unit which is versatile and can be adapted to a piece of furniture of any shape.

Another object of the present invention consists of devising a pull-out unit which is both capable of stably supporting in protruding position the objects when it is extracted.

An additional object of the present invention consists of devising a pull-out unit which can be installed on hardly accessible spaces, or also asymmetrical ones and having a tortuous and irregular shape as the ones present in boats, recreational vehicles or airplanes, in order to exploit as much as possible, the volume of the space.

A further object of the present invention consists of devising a pull-out unit which is both scalable and versatile, in other words the number of the objects which are installed to the pull-out unit can vary and can be easily changed in terms of type and order whenever the user desires so.

These objects are met according to the invention with the features listed in the attached independent claim 1.

Advantageous embodiments will appear from the dependent claims.

### Summary of the invention

The pull-out unit, according to the invention, is configured to be installed inside a space of a containment body, and comprises guide means defining an open trajectory, sliding support means comprising a chain engaged with the guide means and slidingly mounted with respect to the guide means. The chain comprises a set of sliders connected to each other and slidingly mounted to the guide means. The objects to be moved can be connected to the sliding support means, in other words to the chain, for example by connection means provided by the pull-out unit. The sliding of the chain with respect to the guide means occurs along the open trajectory defined by the guide means and enables to make accessible from outside of the containment body one or more objects engaged with the chain.

The pull-out unit according to the invention is defined by claim 1.

### Definitions and conventions

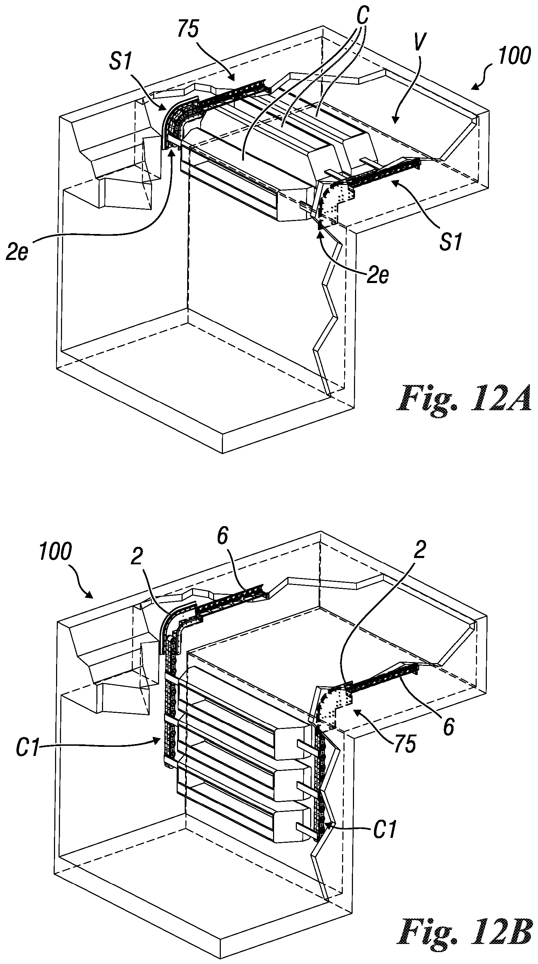

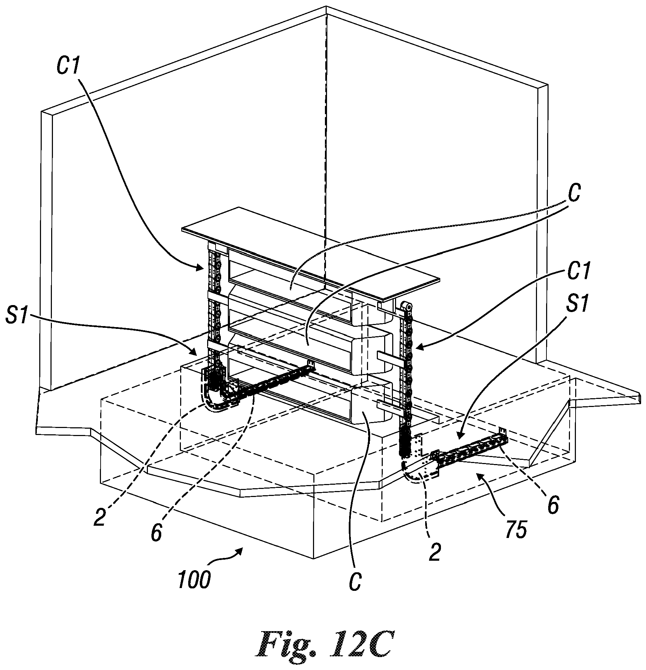

In the context of the present dissertation, the following definitions/conventions apply:
- the wording "pull-out unit" means a device which can be at least partially pull out from a containment body in which is installable or installed; particularly, in an installed condition, the guide means can be pulled out from the containment body so that the objects connected to the guide means can be usable from outside of the containment body;
- the wording "wall" means any horizontal or vertical wall, or any wall inclined by any angle with respect to a horizontal or vertical plane; therefore, examples of walls are vertical walls, bottom walls, lateral walls, ceilings, floorings, attics, suspended ceilings, etcetera. Preferably, the wall on which the pull-out unit is destined to be fixed is a wall delimiting a space (or recess) that is difficult to access;
- the wording "containment body" means any type of body defining an internal volume (space or recess) in which at least one pull-out unit can be installed. Not exhaustive examples of possible containment bodies are the following: a piece of furniture, an attic, a storage room, an air shaft, etcetera;
- the wording "spaces difficult to access" means not easily accessible spaces, particularly the ones in which the user has not an easy access to the internal volume of the space (except by means of uncomfortable positions/operations), for example spaces arranged overhead (i.e. spaces arranged at a height greater than a regular/easy accessibility height for a user, for example attics, see Figures 12A, 12B), spaces arranged in proximity of the floor (for example spaces of furniture, i.e. spaces arranged at a height less than a regular/easy accessibility height for a user, see Figure 12C) or generally built-in spaces (for example in a piece of furniture or in a wall or in a floor) or air shafts, etcetera;
- the wording "conditions of installation" of a pull-out unit means the conditions in which the pull-out unit is installed in a space of a containment body so that it can make the objects engaged with it accessible from outside of the containment body;
- the wording "open trajectory" means a trajectory forming an open path, i.e. a path in which the starting point or starting end thereof and the final point or final end thereof do not coincide. According to the context, the open trajectory (also definable as open path) can be referred to guide means of the pull-out unit (which define the described trajectory of the movement of the chain), and to the chain, and to the objects engaged with the chain (which describe preferably said trajectory integrally with the chain). With reference to the chain, the open trajectory which it describes is partially defined by the guide means, up to the outlet section (inside the containment body housing the pull-out unit) and partially beyond the outlet section (outside said containment body) where the chain protrudes in its operating position;
- the wording "outlet section" of the guide means means a portion of the guide means destined to be positioned, in installed conditions of the pull-out unit wherein the pull-out unit is installed in a space, in proximity of or at a free edge of the wall which the pull-out unit is connected to; in the operating position of the chain, one or more sliders protrude from the outlet section and consequently from the free edge of the wall (such protrusion enables a user to access the objects). Preferably, the outlet section comprises a terminal end (or just called "end") of the guide means with respect to which the chain can slide. The outlet section is, in a strict sense, a reentry/outlet section for the sliders (because it enables the sliders both to exit from it and the opposite movement which provides the entry/reentry of the sliders in it);
- the wording "idle position" means a position of the chain wherein the sliders do not protrude from the outlet section of the guide means;
- the wording "operating position" means a position in which at least one slider (particularly a plurality of sliders) protrudes at least partially from the outlet section of the guide means;
- when the pull-out unit is in installed conditions, the guide means and the chain are configured to make each object to follow an open trajectory between the ends of the trajectory itself which do not coincide with each other. When an object transitions from the idle position to the operating one (forward path) and when it transitions from the operating position to the idle one (return path), therefore it will describe the same trajectory but with respective opposite travelling directions.

### Brief description of the drawings

In order to give a better illustration, the description of the pull-out unit according to the invention continues by making reference to the attached drawings, having only a non-limiting explicative aim, wherein:
Figure 1 is an axonometric view of a corner piece of furniture inside which a pull-out unit according to the invention is mounted; in said Figure 1, the chain of the sliding support means of the pull-out unit is in an operating position;
Figure 2 is an axonometric view of a corner piece of furniture wherein the chain of the sliding support means of the pull-out unit is in an idle position;
Figure 3 is an axonometric view of a corner piece of furniture wherein the chain of the sliding support means is in an operating position and containers are connected to the chain;
Figure 4 is the same as Figure 3 except for the chain in the idle position;
Figures 5 and 5A show a first type of pull-out unit according to the invention, respectively shown in an axonometric and top plan views;
Figure 5B is an axonometric view of the guide means of the pull-out unit shown in Figures 5 and 5A;
Figure 5C schematically shows the shape of the terminal end of the guide means of Figure 5B;

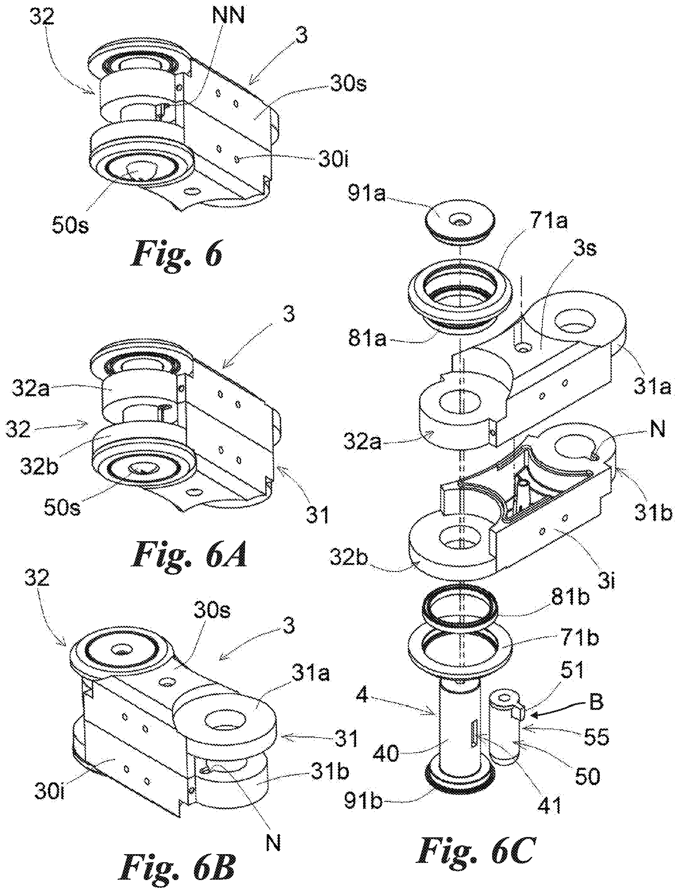

Figures 6, 6A and 6B show, by axonometric views, a slider of the chain of the sliding support means of the pull-out unit, shown in Figures 5 and 5A;
Figure 6C is an exploded axonometric view of the slider shown in Figures 6, 6A and 6B;
Figure 7 is an exploded axonometric view of two sliders of the chain of the sliding support means of the pull-out unit shown in Figures 5 and 5A;
Figures 7A, 7B and 7C show, by axonometric views, the mode by which the sliders shown in Figure 7 lock and unlock with each other;
Figure 8 is an axonometric view of the second type of pull-out unit according to the invention;
Figure 8A is an axonometric view of the guide means of the pull-out unit shown in Figure 8;
Figure 8B schematically shows the shape of the terminal end of the guide means of Figure 8A;
Figure 9 is an assembled axonometric view of two sliders of the chain of the sliding support means of the pull-out unit of Figure 8;
Figure 9A is an exploded axonometric view of the two sliders of Figure 9;
Figure 10 is an axonometric view of a third type of pull-out unit according to the invention;
Figure 10A is an axonometric view of the guide means of the pull-out unit shown in Figure 10;
Figure 10B schematically shows the shape of the terminal end of the guide means of Figure 10A;
Figure 11 is an assembled axonometric view of two sliders of the chain of the sliding support means of the pull-out unit of Figure 10;
Figure 11A is an exploded view of the two sliders of Figure 11;
Figure 11B is a top plan view of one of the sliders of Figures 11 and 11A;
Figures 11C and 11D show the mode by which two sliders in Figure 11 lock and unlock with each other;
Figures 12A and 12B are axonometric views of a system provided with two side-by-side pull-out units mounted inside a containment body (a case or a storage room) arranged at a height greater than the height of regular accessibility for a user, the chains and objects thereof engaged with the chains are vertically movable; during the transition between the idle position and the operating one, the chains follow a downward movement. More particularly, Figure 12A shows the idle position of the chains wherein the pull-out units of the system are completely housed in the space, while Figure 12B shows the operating position of the chains wherein they protrude from the space for making the objects engaged with them accessible;
Figure 12C is an axonometric view of a system provided with two side-by-side pull-out units mounted inside a containment body (defined at the floor, such as a trapdoor) arranged at a height less than a height of regular accessibility for a user, such chains and such objects engaged with the chains can be vertically moved. During the transition between the idle position and the operating one, the chains follow an upward motion; Figure 12C shows the operating position of the pull-out units;
PRIOR ART Figures 13 and 13A schematically show top plan views of a corner kitchen piece of furniture comprising a first pull-out unit according to the prior art;
PRIOR ART Figures 14 and 14A schematically show top plan views of a corner kitchen piece of furniture comprising a second pull-out unit according to the prior art;
PRIOR ART Figures 15, 15A, 15B, 15C schematically show top plan views of a corner kitchen piece of furniture comprising a third pull-out unit according to the prior art.

### Detailed description of embodiments of the invention

The following describes a pull-out unit according to the invention with reference to a kitchen piece of furniture (M) which is a particular case of a containment body inside which the pull-out unit is installable. It is understood that other applications of the invention are possible, as it is explained in the following; the application to the kitchen piece of furniture (M) is given in an exemplifying way.

With reference to Figures from 1 to 12C, a pull-out unit according to the invention generally indicated by the reference codes (S1, S2, S3) is described.

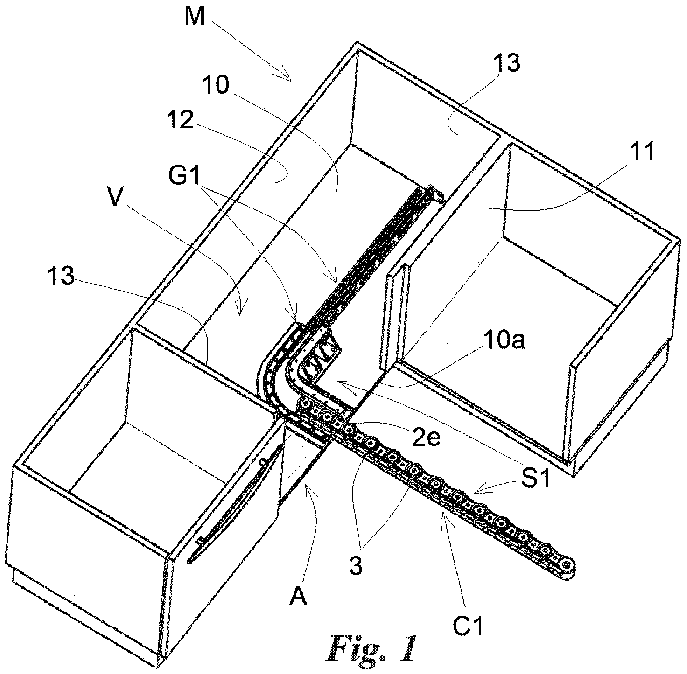

Figures 1, 2, 3 and 4 show the pull-out unit (S1, S2, S3) still mounted to a corner kitchen piece of furniture (M) with an off-centered access opening (A) perpendicular to the longitudinal axis of the space (V) of the piece of furniture. The term "off-centered access opening" means an opening which is distanced from a centerline of the volume of the space (V); for example, referring to Figure 1, the access opening (A) is defined on the left portion of the space and therefore is shifted with respect to a centerline of the volume of the space, which is defined midway from the space.

Particularly, the piece of furniture (M) comprises a bottom wall (10), a front lateral wall (11), a rear lateral wall (12), transversal walls (13), an upper wall (not shown in the attached figures), a space (V) delimited by said walls (10, 11, 12, and 13) and an access opening (A) to the space.

At the access opening (A), the bottom wall (10) comprises a free edge (10a).

A door can be applied to the access opening (A), the door not being shown in the attached Figures and not being an object of the present invention.

The pull-out unit (S1, S2, S3) for the objects (C) according to the invention is mounted to the bottom wall (10) of the piece of furniture (M).

Particularly, in the attached figures, the objects (C) consist of waste sorting containers.

Even though in the attached figures, the pull-out unit (S1, S2, S3) is always shown associated to containers, nothing prevents it from being used for other objects (C) such as for example bottle holders and/or dish or tableware racks.

The pull-out unit (S1, S2, S3) according to the invention comprises guide means (G1, G2, G3) destined to be fixed to the bottom wall (10) of the piece of furniture (M), and sliding support means slidingly connected to the guide means (G1, G2, G3) and destined to support objects (C). Therefore, the guide means (G1, G2, G3) are configured to guide a sliding of the sliding support means along a trajectory defined by the guide means themselves. It is understood that, in other embodiments, the guide means can be fixed to another wall of the containment body.

The sliding support means comprise a chain (C1, C2, C3) comprising sliders (3) connected to each other and slidingly mounted to guide means (G1, G2, G3). The sliding of the chain (C1, C2, C3) and therefore of the sliders (3) with respect to the guide means (G1, G2, G3) can occur along the trajectory defined by said guide means and can extend beyond the outlet section of the guide means which will be described in the following, both in a travelling direction and in the opposite travelling direction, by determining the transition between the idle position and the operating one and viceversa. The chain (C1, C2, C3) has an open configuration (it is not a closed chain) and, when it moves between the idle position and the operating one, it follows an open path or open trajectory which makes it protrude, in the operating position, with respect to the outlet section, while in the idle position it is retracted with respect to the outlet section.

The attached figures show three different types of pull-out units (S1, S2, S3) which differ from each other specifically by the shape of the guide means (G1, G2, G3) and by the shape of the sliders (3) of the chain (C1, C2, C3) of the sliding support means.

Such differences among the pull-out units (S1, S2, S3) are simply due to design choices. As a matter of fact, all the three pull-out units (S1, S2, S3) share anyway the same inventive idea which will be explained in the following. It is understood that many further types of pull-out units can be provided, the design choices thereof can be function of the installation which are destined to and of the associated spatial and/or structural constrains.

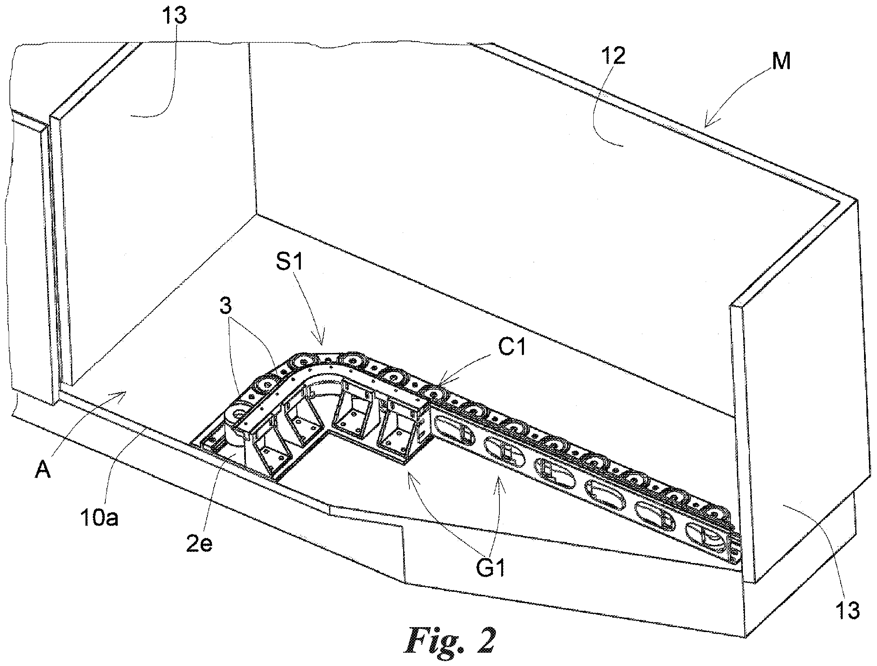

The guide means (G1, G2, G3) of the three types of pull-out units (S1, S2, S3), shown in the attached figures, develop according to a path defined at least by a broken or curvilinear line and having an open trajectory and comprise an outlet section (2e). In conditions of installation of the pull-out unit in which it is associated to the piece of furniture, the guide means are destined to be positioned inside the piece of furniture and the outlet section is destined to be positioned in proximity of or at a free edge (10a) of the bottom wall (10) of the piece of furniture (M). The open trajectory defines an open path along which the guide means (G1, G2, G3) extend. The outlet section (2e) is an outlet section for the sliders (3), i.e. a section from which the sliders (3) can exit during the transition from the idle position to the operating one (or, during the opposite transition, the sliders (3) can reenter in it), by going beyond it. It is observed that in the embodiments illustrated in the attached figures, the outlet section for the sliders (3) is formed by a terminal end (2e) of the guide means (G1, G2, G3) destined to be installed at said free edge (10a); in particular, as illustrated in the Figures 2, 3, and 4, the terminal end (2e) can be destined to be arranged, in conditions of installation of the pull-out unit, substantially flush with said free edge (10a).

The trajectory along which the guide means (G1, G2, G3) develop lies on a plane, preferably on a horizontal plane; in the attached Figures from 1 to 4 the guide means (G1, G2, G3) lie on a horizontal plane parallel to the bottom wall (10) of the piece of furniture (M). It is understood that, in other embodiments, the lying plane of the guide means can be a vertical plane (see Figures 12A, 12B, and 12C) or can be inclined with respect to a horizontal and/or vertical plane and/or can be more or less parallel to a bottom wall or lateral wall or transversal wall or upper wall defining the space which the pull-out unit is installed in.

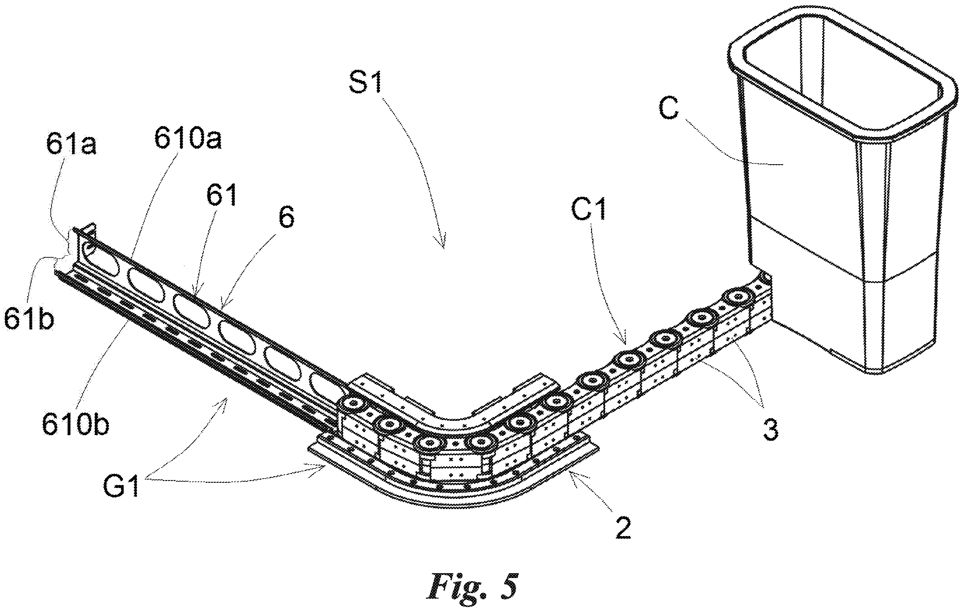

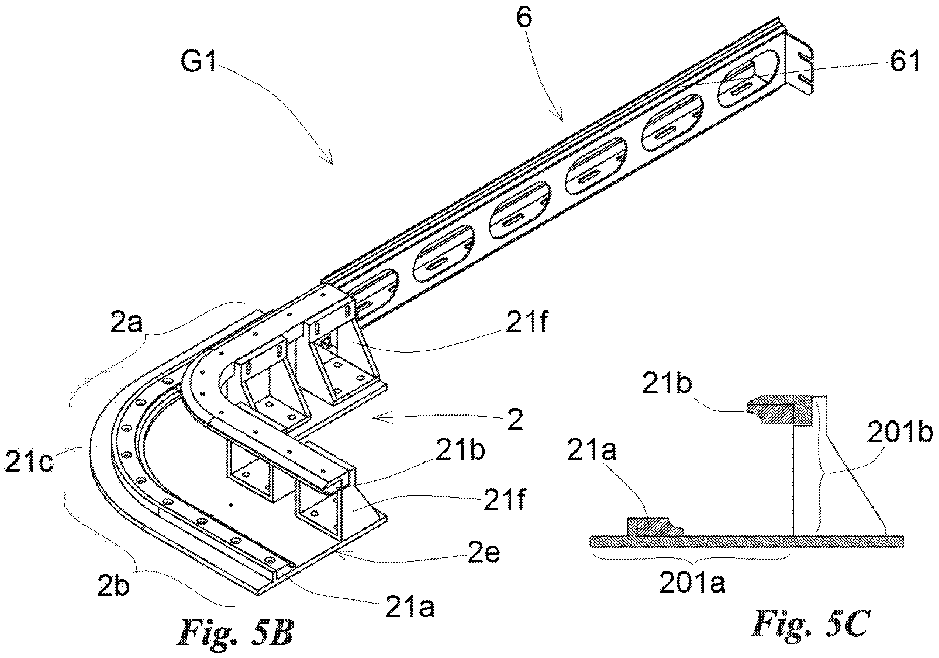

Referring particularly to Figures 5B, 8A, and 10A, according to the invention the guide means (G1, G2, G3) comprise a housing portion (2). Said housing portion (2) ends at the above cited outlet section (2e). Substantially, in the illustrated embodiments, the housing portion (2) ends at said terminal end (2e) of the guide means (G1, G2, G3). Said housing portion (2) is shaped in order to define a housing apt to contain the sliders (3) of the chain both during the stationing and during the sliding of the sliders (3) of the chain (C1, C2, C3) along the guide means (G1, G2, G3).

In all the embodiments shown in the attached figures, said housing portion (2) comprises a first section (2a) and a second section (2b) inclined with respect to each other.

Preferably, the first section (2a) and the second section (2b) of the housing portion (2) are orthogonal to each other.

Advantageously, said second section (2b) of the housing portion (2) is perpendicular to the free edge (10a) of the bottom wall (10).

Even though said housing portion (2) is shown with two inclined sections, nothing prevents, in alternative embodiments of invention, said housing portion (2) from being rectilinear or curvilinear with many inclined or curvilinear sections.

The guide means (G1, G2, G3) further comprise a stationing portion (6) connected to the housing portion (2). The stationing portion (6) can be rectilinear or can extend along a curvilinear trajectory. If the stationing portion (6) is rectilinear, the housing portion (2) will be required to have the at least two sections inclined with respect to each other or to be curvilinear. The stationing portion (6) is defined in proximity of an inlet section of the housing portion (2) opposite to the outlet section (2e); to this end, see Figure 5B, for example.

Moreover, the pull-out unit (S1, S2, S3) comprises, as already said, sliding support means coupled with the guide means (G1, G2, G3) and destined to support the objects (C).

The sliding support means comprise the above mentioned chain (C1, C2, C3) consisting of a series of sliders (3) connected to each other and slidingly mounted to the guide means (G1, G2, G3).

The pull-out unit (S1, S2, S3) can comprise connection means (not shown in the attached figures) enabling to connect the objects (C) to the sliding support means. In particular, said connection means are shaped so that to enable the connection of one of the objects (C) to a single slider (3) of the chain (C1, C2, C3) of the sliding support means. It may be provided that each object (C) is connected to a single slider (3) or that an object (C) is connected to a plurality of sliders (3); it may be provided that a plurality of objects is connected to the same slider. When an object (C) is connected to a plurality of sliders, it may be provided that the object (C) is flexible or anyway configured to adapt to the curvilinear or broken trajectory which the chain follows.

In an embodiment, each slider (3) is arranged to be able to hook a single object (C); this enables to easily move the sliders (3) along the open trajectory described by the chain. In such embodiment, for objects having a width greater than the one of the sliders (3), between the slider (3) where the object (C) is hooked and the slider (3) where another object (C) is hooked, there will necessarily be sliders (3) where no object (C) is hooked.

In an embodiment, said connection means comprise screws inserted both in holes made in the objects (C) and in holes made in the sliders (3). Said connection means can be also a variety of accessories such as hooks or similar applied to the slider (3). In another embodiment, the connection means can be directly made on the objects (C) and/or can be integral with them; substantially, the objects (C) can be shaped to be hooked to one or more sliders (3).

As an alternative, each object (C) or container can be also connected to a slider (3) by a suitable bracket fixed on a side to a slider (3) and on the other side to the object (C).

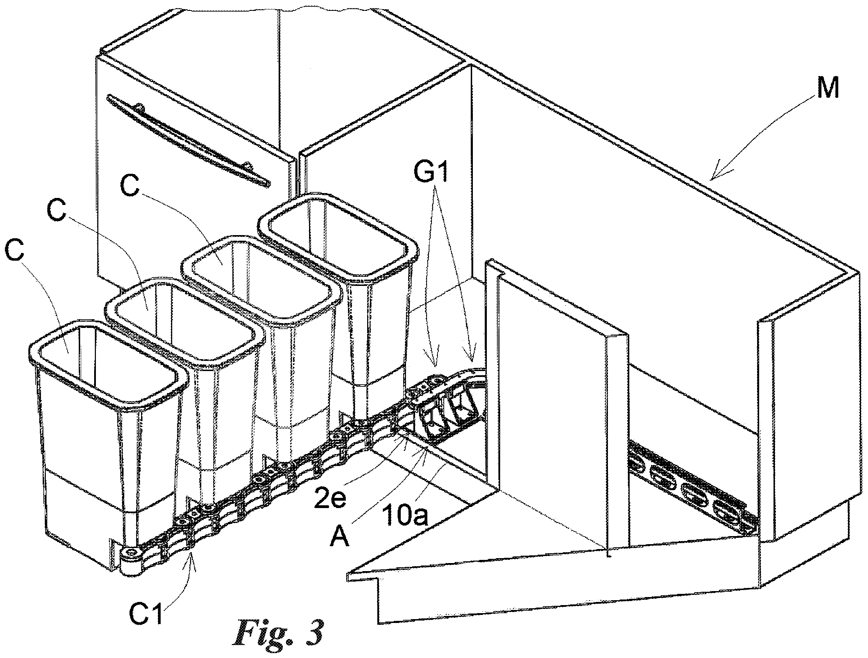

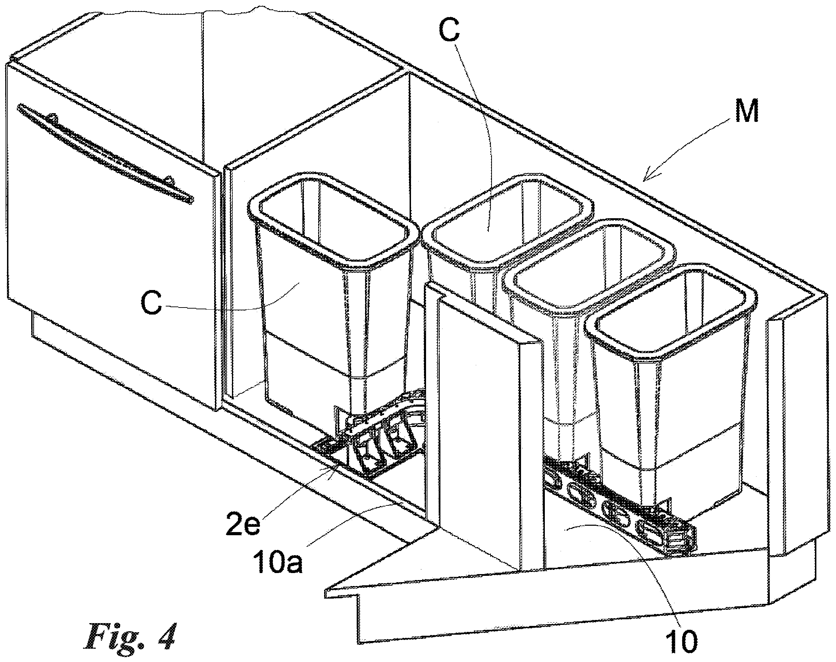

The above mentioned chain (C1, C2, C3) of the sliding support means can alternatively take:
- an idle position, shown in Figures 2 and 4, in which all the sliders (3) do not protrude from the outlet section (2e) of the guide means (G1, G2, G3); preferably, in the idle position, all the sliders (3) are engaged with, particularly are inserted in, the guide means (G1, G2, G3); and
- an operating position, shown in Figures 1 and 3, preferably in which at least one slider or some sliders (3) protrude from the outlet section (2e) of the guide means (G1, G2, G3) and particularly are extracted from the guide means (G1, G2, G3).

Substantially, the pull-out unit (S1, S2, S3) according to the invention provides a device which moves the objects (C) supported by it so as to conceal them, in other words a device by which the objects (C) can be completely housed inside the space (V) (idle position of the chain) by making them substantially concealed from outside of the space (V) in order not to form a volume outside the space (particularly when it is provided a door closing the opening of the space), and by which one or more objects (C) can be provided to a user outside the space (V) (operating position of the chain); in this latter position, the chain protrudes at least partially from the outlet section (2e), particularly at least with a slider (3).

In the preferred embodiment of the invention, the sliders (3) and the guide means (G1, G2, G3) are shaped so that, when said chain (C1, C2, C3) is in the operating position, the sliders (3) protruding from the outlet section (2e) are supported in protruding position by the slider or sliders (3) which stations/station in the guide means (G1, G2, G3). Advantageously, this enables to have a substantially self-supporting chain.

As already discussed in all the three types of the pull-out unit (S1, S2, S3) of the piece of furniture (M) according to the invention, the housing portion (2) of the guide means (G1, G2, G3) defines a housing suitable for containing the sliders (3) and for preventing the same sliders (3) from being capable of moving along directions different from the direction set by the housing portion (2), in particular from the direction set by the terminal end (2e) of the guide means (G1, G2, G3).

In other words, said sliders (3), when they are located in the housing portion (2), are caged inside the same housing portion (2) and are constrained to move and slide only along the direction set by the housing portion (2) itself.

In this way, the sliders (3), stationing or sliding in the housing portion (2), are able to support in protruding position the sliders (3) which are arranged outside the housing portion (2). The overall weight of the objects (C) and of the sliders (3) which are outside the housing portion (2), is consequently applied to the housing portion (2).

Each slider (3) is revolvingly connected to the adjacent slider (3) by articulated joining means (4) with an axis orthogonal to the plane on which the guide means (G1, G2, G3) lie and/or to the plane on which the trajectory defined by the guide means develops; such axis can be vertical.

Advantageously, the pull-out unit (S1, S2, S3) comprises locking means (B) apt to:
- keeping two adjacent sliders (3) of the chain (C1, C2, C3) locked and aligned with each other when at least one of the two adjacent sliders (3) protrudes from the outlet section (2e) of the guide means (G1, G2, G3);
- keeping the two adjacent sliders (3) of the chain (C1, C2, C3) unlocked when both the two sliders (3) are retracted with respect to the outlet section (2e), therefore inserted in the guide means (G1, G2, G3), so as to allow the relative movement between the two sliders (3).

The locking means (B) comprise a striker (50) that is movably connected to one of the sliders (3) with the possibility of moving up and down and having a retention tooth (51) apt to be inserted inside a recess (N) integral with the adjacent slider (3) for locking the two sliders (3) to each other when at least one of the two adjacent sliders (3) protrudes from the outlet section (2e).

In other words, the striker (50) can slide up and down between:
- a first position, wherein said retention tooth (51) of the striker (50) is inserted in said recess (N) and locks the two adjacent sliders (3) of the chain (C1, C2, C3), which protrude from the guide means (G1, G2, G3); and
- a second position, wherein said retention tooth (51) of the striker (50) is disengaged from said recess (N) and enables the relative movement between the two adjacent sliders (3) of the chain (C1, C2, C3).

The guide means (G1, G2, G3) comprise a reference surface (R2) against which the striker (50) strikes, and which keeps the striker (50) in its second position. Substantially, the reference surface (R2) cooperates with the striker (50) in order to disengage the retention tooth (51) from the recess (N) (in other words to keep the striker (50) in its second position) when the slider (3) is inserted in the guide means (G1, G2, G3).

Preferably, the reference surface (R2) is apt to raise the striker (50).

In particular, said reference surface (R2) coincides with the surfaces of the guide means (G1, G2, G3) which the striker (50) slides on.

In this way, when the striker (50) strikes and slides on the reference surface (R2), it is raised by disengaging the retention tooth (51) from the recess (N) and enabling the two adjacent sliders (3) to revolve one about the other.

When, on the other hand, one or both the sliders (3) protrude with respect to the outlet section (2e), the striker (50) is no more supported by the reference surface (R2), and consequently by gravity, or due to the action of a spring it goes down and the retention tooth (51) enters the recess (N), consequently locking the relative movement between the two sliders (3) about the pin (40).

Advantageously, the pull-out unit (S1, S2, S3) comprises rolling means (71a, 71b, 72a, 72b, 73, 74) suitable for facilitating the sliding of the chain (C1, C2, C3) along the guide means (G1, G2, G3).

Said rolling means (71a, 71b, 72a, 72b, 73, 74) can be connected to the chain (C1, C2) or can be connected to the guide means (G3).

The following will particularly describe the three types of the pull-out unit (S1, S2, S3) of the piece of furniture (M) according to the invention.

The first type of pull-out unit (S1) is shown in Figures from 5 to 7C.

Referring to Figure 5C, the housing portion (2) of the guide means (G1) of the first type of pull-out unit (S1), shown by a cross-section view, is in the shape of a "L" guide and comprises a horizontal section (201a) and a vertical section (201b). Said housing portion (2) comprises a lower rib (21a) protruding above the horizontal section (201a) and an upper rib (21b) protruding from the vertical section (201b).

In this case the two ribs (21a, 21b) delimit on two opposite vertexes (one upper and one lower) the space on which the sliders (3) of the chain (C1) station or slide.

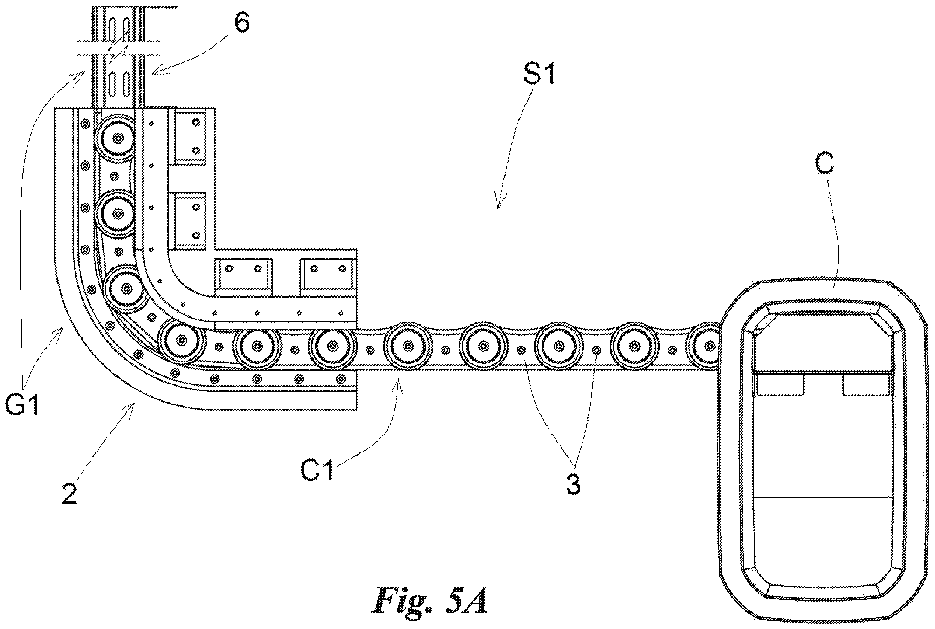

Referring to Figures 5, 5A, 5B, and 5C, in this embodiment the horizontal section (201a) is defined by a base plate (21c) fixed to the bottom wall (10) of the piece of furniture (M), while the vertical section (201b) is defined by brackets (21f).

The stationing portion (6) of the guide means (G1) of the first type of pull-out unit (S1), comprises a rectilinear section (61) having a "L" cross-section and having a vertical fin (61a) ending at its top with a folded section (610a), a horizontal fin (61b) ending at its end with a folded section (610b).

Referring to Figures from 6 to 7C, the following will particularly describe the shape of the sliders (3) of the chain (C1) of the sliding support means of the first type of pull-out unit (S1).

Each slider (3) of the chain (C1) consists of two boxed half-bodies (30s, 30i) coupled to each other, of which an upper boxed half-body (30s) and a lower boxed half-body (30i).

Each slider (3) of the chain (C1) comprises a first end (31) having two eyelets (31a, 31b) overlapped on each other with aligned holes, and a second end (32) comprising two eyelets (32a, 32b) overlapped on each other with aligned holes.

In particular, on each end (31, 32) of the slider (3) there is an upper eyelet (31a, 32a) made on the upper boxed half-body (30s) and a lower eyelet (31b, 32b) made on the lower boxed half-body (30i).

The two eyelets (31a, 31b) of the first end (31) are staggered with respect to the eyelets (32a, 32b) of the second end (32).

The articulated joining means (4) of the chain (C1) of the first type of pull-out unit (S1) comprise a pin (40) inserted both in the eyelets (31a, 31b) of the first end (31) of a slider (3) and in the eyelets (32a, 32b) of the second end (32) of the other slider (3).

In such embodiment of the invention, said pin (40) is hollow and is integrally connected to one of the two sliders (3) so that the orientation thereof does never change with respect to the slider (3) which is integrally connected to.

Said pin (40) comprises a vertical guide slit (41).

In such embodiment, the beforehand cited recess (N) is made on a perimetral edge of the hole of one of the two eyelets (31b) of the end (31) of the slider (3) which the pin (40) is not integrally connected to.

The beforehand cited recess (N) is made in a position so that when the two sliders (3) are aligned to each other, said recess (N) and said vertical guide slit (41) are side-by-side.

In such embodiment, the beforehand cited striker (50) consists of a sliding pin (5s) inserted inside the hollow pin (40). The retention tooth (51) protrudes outside the sliding pin (5s). Said retention tooth (51) is in turn slidingly inserted in the guide slit (41).

The sliding pin (5s) can slide up-and-down inside the hollow pin (40).

The sliding pin (5s) comprises, at its base, a sliding portion (50s) in the shape of a semi-sphere, destined to slide on the reference surface (R2) of the guide means (G1).

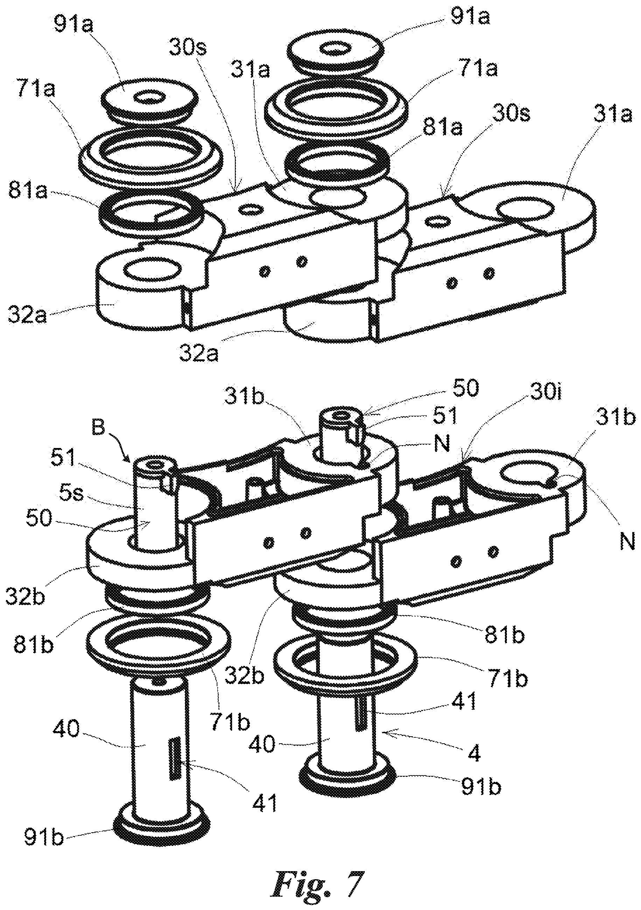

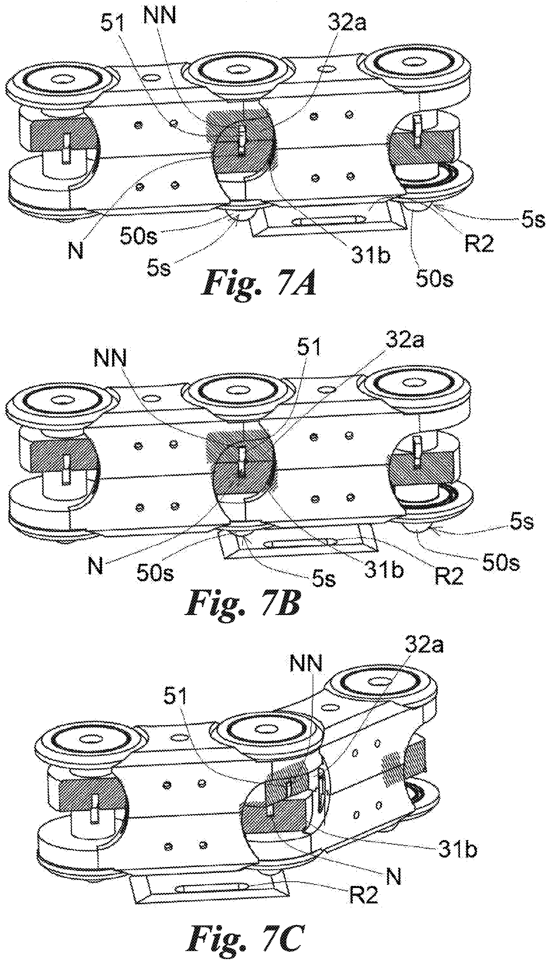

With reference to Figures 7A, 7B, and 7C, it is possible to observe that:
- when the sliding pin (5s) abuts the reference surface (R2) (see Figures 7B and 7C), the retention tooth (51) is disengaged from the recess (N) enabling the relative rotation between the two sliders (3);
- when the sliding pin (5s) does not abut the reference surface (R2), the retention tooth (51) is inserted into the recess (N), locking the relative rotation between the two sliders (3).

Preferably, the pin (40) is made integral to one of the two sliders (3) by a further recess (NN) made on the eyelet (32a) of the slider (3) which the pin (40) is integral to. As a matter of fact, said retention tooth (51) is inserted inside said further recess (NN) both when the sliding pin (51) abuts the reference surface (R2) and when it does not abut the reference surface (R2).

More particularly, when the sliding pin (5s) is raised, the retention tooth (51) is only inserted in the further recess (NN), while when the sliding pin (5s) is lowered, the retention tooth (51) is partially inserted in the further recess (NN) and partially in the recess (N).

In the first type of sliding unit (S1), the beforehand cited reference surface (R2) coincides:
- with a surface of the base plate (21c) of the housing portion (2); and
- with a surface of the horizontal fin (61b) of the section (61) of the stationing portion (6).

In the first type of pull-out unit (S1), the rolling means (71a, 71b) are connected to the chain (C1) and comprise a pair of idle wheels (71a, 71b) having a vertical rotation axis for each pin (40). In particular, each pair of idle wheels (71a, 71 b) comprise:
- an upper idle wheel (71a) apt to roll on the upper guide (21), and
- a lower idle wheel (71b) apt to roll on the lower guide (22).

The hollow pin (40) comprises an upper end section protruding above the upper eyelet (31a) of the first end (31) of one of the two sliders (3) and a lower end section protruding below the lower eyelet (32b) of the second end (32) of the other slider (3).

The upper idle wheel (71a) is arranged around the upper section of the hollow pin (40), while the lower idle wheel (71b) is arranged around the lower section of the hollow pint (40).

A bearing (81a, 81b) is arranged between each idle wheel (71a, 71b) and the pin (40).

Above and below the hollow pin (40) are respectively applied an upper plug (91a) and a lower plug (91b) which prevent the idle wheels (71a, 71b) and the bearings (81a, 81b) from being disengaged from the hollow pin (40).

Preferably, the lower plug (91b) is in an annular shape and is made in one piece with the hollow pin (40), while the upper plug (91a) is in a shape of a disk and is separated from and snap hookable to the pin (40).

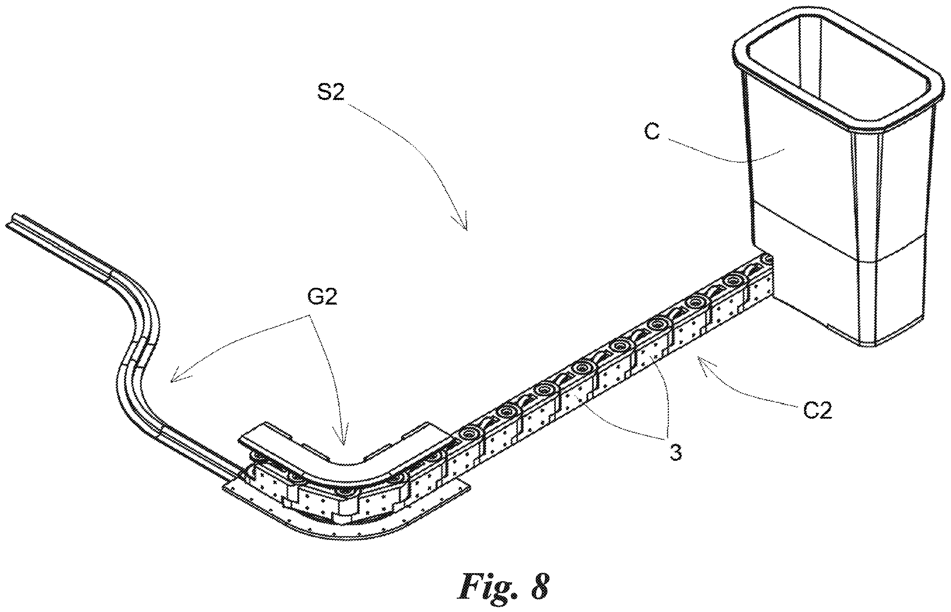

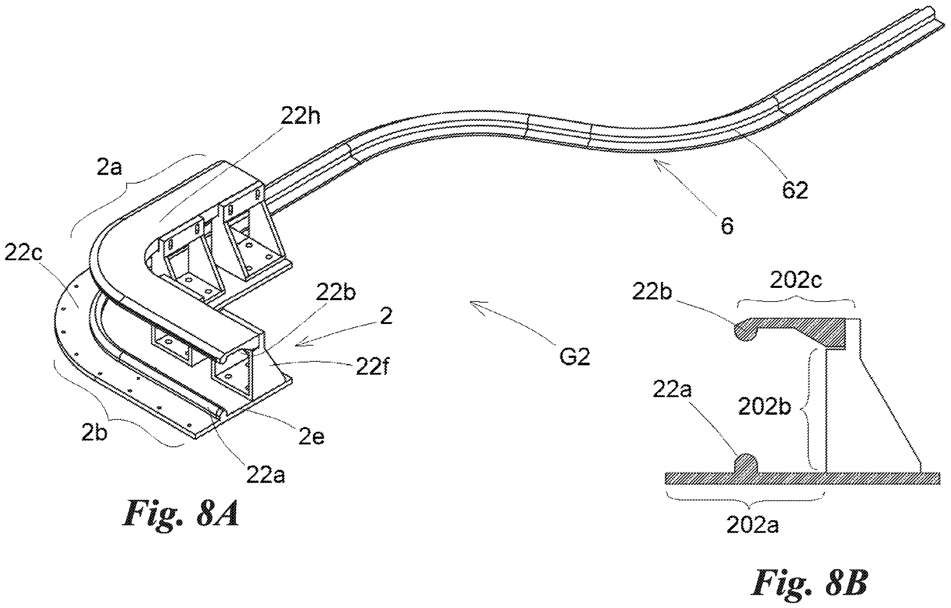

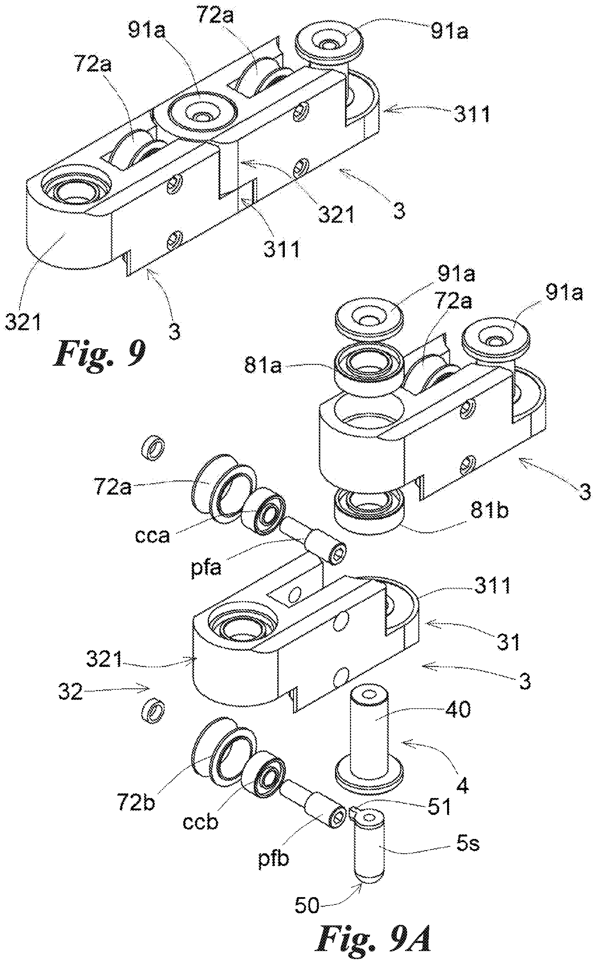

With reference to Figures 8, 8A, 8B, 9 and 9A, the second type of pull-out unit (S2) is shown.

Referring particularly to Figure 8B, the housing portion (2) of the guide means (G2) of the second type of pull-out unit (S2) is substantially in the shape of a "C" guide. In said housing portion (2) of the guide means (G2), it is possible to distinguish a lower horizontal section (202a), an upper horizontal section (202c), and a vertical section (202b). Said housing portion (2) comprises a lower rib (22a), protruding above the lower horizontal section (202a), and an upper rib (22b) protruding below the upper horizontal section (202c) and which is aligned with the beforehand cited lower rib (22a).

Therefore, the lower rib (22a) and the upper rib (22b) delimit above and below the guide section and prevent the sliders (3) from laterally moving or from moving up-and-down.

With reference to Figures 8, 8A, and 8B, in such embodiment, the lower horizontal section (202a) is defined by a base plate (22c) fixed to the bottom wall (10) of the piece of furniture (M), the vertical section (22b) is defined by brackets (22f), while the upper horizontal brackets (202c) is defined by a plate (22h) supported in protruding position by the brackets (22f).

The stationing portion (6) of the guide means (G2) of the second type of pull-out unit (S2) comprises a rib (62) shaped in order to define with the lower rib (22a) of the housing portion (2) a single rail without interruption.

In this case, the further rib (62) of the stationing portion (6) extends along a curvilinear trajectory.

With reference to the sliders (3), in such second type, the sliders (3) of the chain (C2) of the second type of pull-out unit (S2) are substantially similar to the ones of the first type except for some differences.

With reference to Figures 9 and 9A, first of all, each slider (3) consists of a single boxed body and not of two couplable boxed bodies.

Moreover, each end (31, 32) of the slider (3) comprises, instead of two eyelets, a single eyelet (311, 321). The eyelets of the two ends (31, 32) lie on two staggered parallel places. Also in this case, the articulated joining means (4) comprise a pin (40) inserted into the eyelets (321, 322) of two adjacent sliders (3).

The mode by which the sliders (3) are hinged to each other and the mode by which said sliders (3) are locked to each other are the same as the ones of the chain (C1) of the first type of pull-out unit (S1).

In other words, also in the second type of pull-out unit (S2):
- the pin (40) is hollow and comprises the above mentioned vertical guide slit (41),
- the recess (N) is made on a perimetral edge of the hole of the eyelet (311, 321) of the end (31, 32) of the slider (3) which the hollow pin (40) is not integrally connected to;
- the striker (50) consists in the above mentioned sliding pin (5s) from which the retention tooth (51) outwardly protrudes, which is slidingly inserted in said guide slit (41);
- the sliding pin (5s) can slide up-and-down inside the hollow pin (40) by inserting or extracting the retaining tooth (51) into/from the recess (N).

In such second type of pull-out unit (S2), the beforehand cited reference surface (R2) consists:
- of the lower rib (22a) of the housing portion (2); and
- of the rib (62) of the stationing portion (6).

A bearing (81a, 81b) is interposed between the pin (40) and each eyelet (321, 322).

An upper plug (91a) and a lower plug (91b) can be respectively applied above and below the hollow pin (40), the plugs prevent the bearings (81a, 81b) from being extracted from the hollow pin (40).

With reference to Figures 9 and 9A, the rolling means (72a, 72b) are connected to the chain (C2) and in this case they comprise horizontal axis idle wheels (72a, 72b).

In particular, on each slider (3) it is connected a concave upper idle wheel (72a) destined to roll on the upper rib (22b) of the housing portion (2) and a concave lower idle wheel (72b) destined to roll on the lower rib (22a) of the housing portion (2) and on the rib (62) of the stationing portion (6).

Each concave idle wheel (72a, 72b) is revolvingly mounted on a corresponding pivoting pin (pfa, pfb) passing across the boxed body of the slider (3). Each idle wheel (72a, 72b) partially protrudes outside the boxed body of the slider (3).

A bearing (cca, ccb) is interposed between the idle wheels (72a, 72b) and the pivoting pin (pfa, pfb).

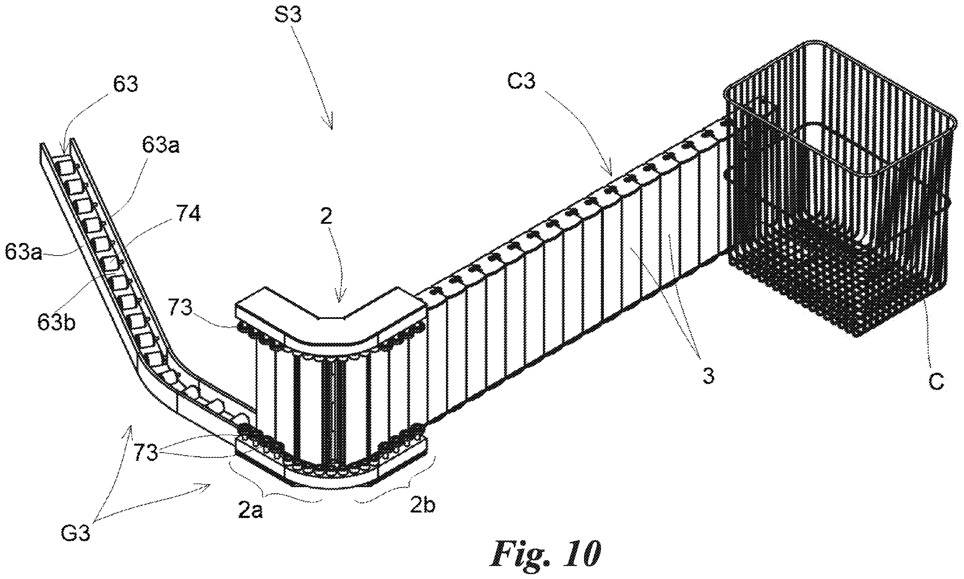

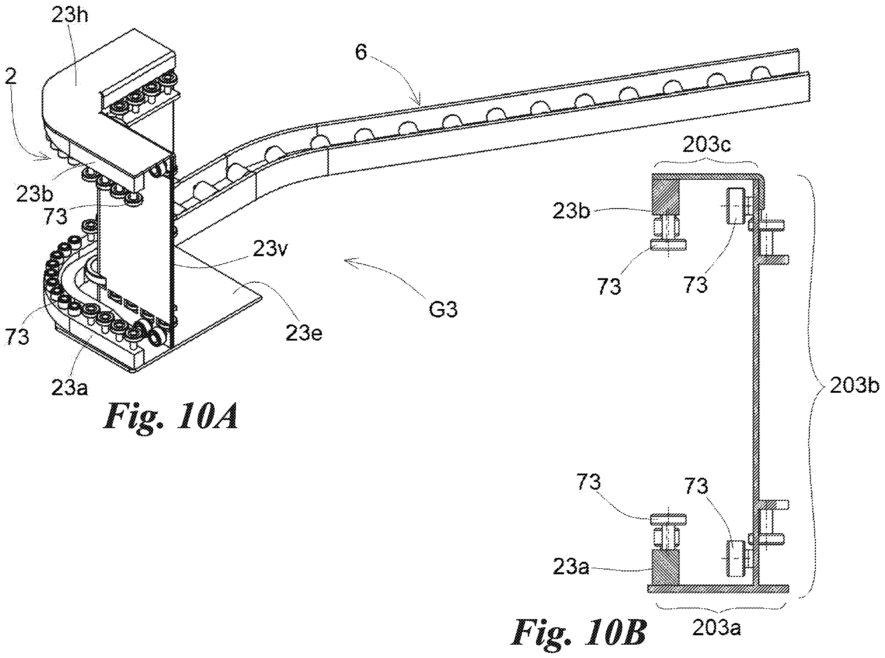

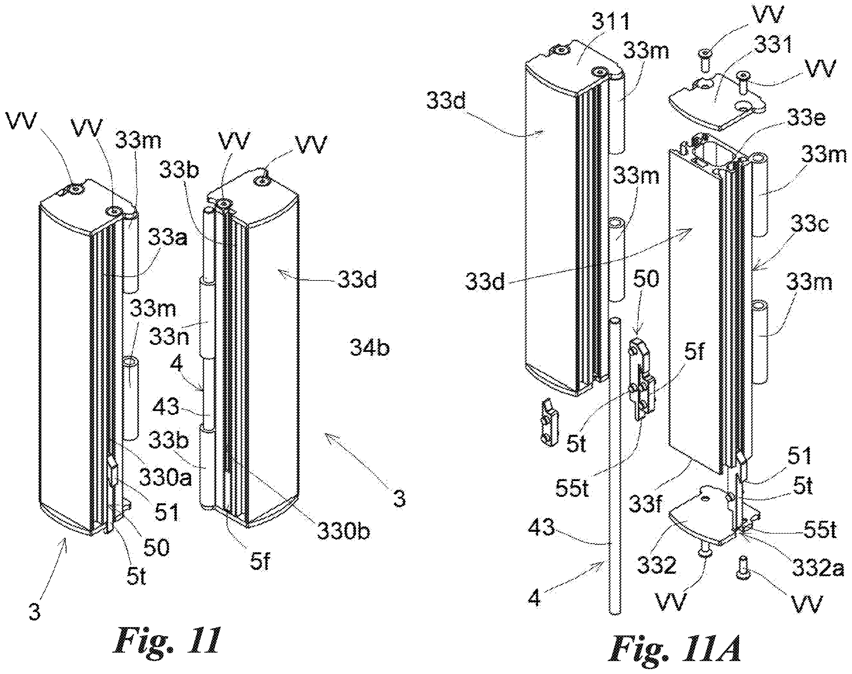

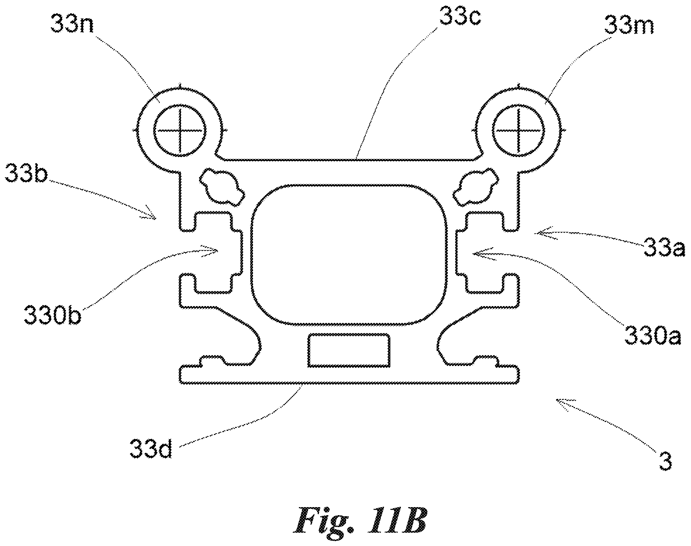

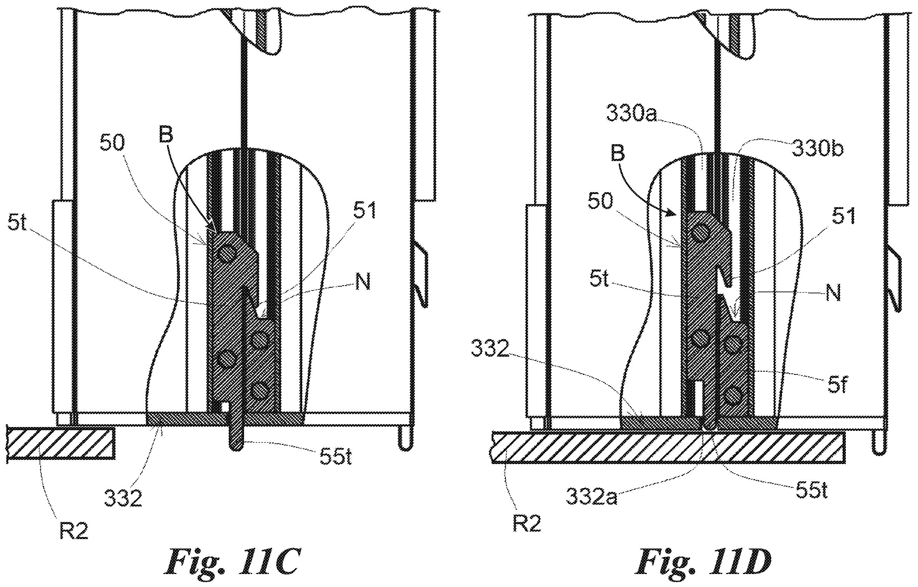

With reference to Figures 10, 10A, 10B, 11, 11A and 11B, 11C and 11D, the following describes the third type of pull-out unit (S3).

With reference to Figure 10B, the housing portion (2) of the guide means (G3) of the third type of pull-out unit (S3) has a cross-section substantially being in the shape of a "C" guide, and comprises a base horizontal section (203a), an upper horizontal section (203c), and a vertical section (203b).

With reference to Figures 10, 10A and 10B, the base horizontal section (203a) is defined by a base plate (23e) fixed to the bottom wall (10) of the piece of furniture (M). The vertical section (203b) is defined by a vertical plate (23v), while the upper horizontal section (203c) is defined by an upper plate (23h) supported in protruding position by the vertical plate (23c).

At the ends of each horizontal section (203a, 203c) there is a strip (23a, 23b) implementing the terminal folding of the "C" section of the housing portion (2).

The stationing portion (6) of the guide means (G3) of the third type of pull-out unit (S3) comprises a curvilinear "U" section (63) comprising two parallel lateral rails (63a) and a bottom wall (63b). The "U" section (63) is curvilinear in the sense that has two sections inclined with respect to each other.

With reference to Figures 11, 11A and 11B in the third type of pull-out unit (S3), each slider (3) of the chain (C3) consists in a section having a longitudinal axis parallel to the hinge axis of the articulated joining means (4).

In this case, each slider (3) comprises a first lateral face (33a), a second lateral face (33b), opposite to said first lateral face (33a), an internal face (33c), an external face (33d), an upper face (33e) and a lower face (33f).

Each lateral face (33a, 33b) comprises a groove (330a, 330b) extending along all the length of the lateral face (33a, 33b).

Further, each slider (3) comprises a pair of sleeves (33m, 33n), aligned to each other, arranged at the corner defined by each lateral face (33a, 33b) with the internal face (33c).

The pair of sleeves (33m) arranged at the corner between the first lateral face (33a) and the internal face (33c) are staggered with respect to the pair of sleeves (33n) arranged at the corner between the second lateral face (33b) and the internal face (33c).

The articulated joining means (4) comprise a bar (43) inserted into the sleeves (33m, 33n) of two adjacent sliders (3).

Anyway, it is noted that, even though two sleeves (33m, 33n) are located at each corner, all the things will remain the same even though a single sleeve (33m, 33n) or a plurality of sleeves are located at each corner. The sleeves of one corner must be anyway always staggered with respect to the sleeves of the other corner.

Each slider (3) comprises an upper closure plate (331) and a lower closure plate (332) respectively fixed to the upper face (33e) and to the lower face (33f) of the slider (3) by means of fixing screws (vv).

In the third type of pull-out unit (S3), said striker (50) of the locking means consists in a movable insert (5t) slidingly mounted in the groove (330a) of one of the two lateral faces (33a) of the slider (3) and from which said retention tooth (51) protrudes. On the contrary, said recess (N) is arranged in the groove (330b) of the other lateral face (33b) of the slider (3) and is defined by a fixed insert (5f) inserted in the groove (330b) itself.

Advantageously, the lower closure plate (332) comprises, on its perimetral edge, a recess (332a) destined to be aligned with the groove (330a) which the mobile insert (5t) is slidingly mounted in.

Said movable insert (5t) comprises a thinned lower section (55t) which is destined to cross said recess (332a) and which is apt to abut the reference surface (R2).

With reference to the Figures 11C and 11D, it is possible to observe that:
- when the lower section (55t) slides on and abuts the surface (R2) (see Figure 11D), then the movable insert (5t) is raised and the retention tooth (51) is disengaged from the recess (N), enabling in this way a relative rotation between the two sliders (3);
- when the lower section (55t) does not slide or abut the reference surface (R2) (see Figure 11C), the movable insert (5t) drops downwards by gravity or due to the action of a spring and the retention tooth (51) enters the recess (N), locking the relative rotation between the two sliders (3).

In the third type of pull-out unit (S3) of the piece of furniture (M) according to the invention, the rolling means (73, 74) are connected to the guide means (G3).

In particular, the rolling means (73, 73) comprise:
- vertical axis and horizontal axis idle wheels (73) arranged on the housing portion (2), and
- rolls (74) arranged on the stationing portion (6) between the two curvilinear rails (63) which the sliders (3) slide and station on.

In the third type of pull-out unit (S3), the reference surface (R2) enabling to raise the striker (50), i.e. the movable insert (5t), coincides:
- with a surface of the base plate (23e) of the housing portion (2); and
- with the surfaces of the rolls (74) arranged in the "U" section (63) of the stationing portion.

The pull-out unit, even though is not shown in the attached figures, can comprise conventional automatic movement means connected to the chain (C1, C2, C3) and apt to automatically move the chain (C1, C2, C3) between its idle position and its operating position.

Further, the pull-out unit (S1, S2, S3) can comprise also limit damping means, known to a person skilled in the art, shaped so that to generate a damping effect slowing the sliding of the chain (C1, C2, C3) when the same is going to reach the idle position or the operating position.

Due to the beforehand cited description, now the advantages introduced by the present invention are apparent.

First of all, the pull-out unit according to the invention enables to exploit the overall width of a piece of furniture or the volume of a space that is difficult to access and moreover enables to extract or introduce objects from/into the piece of furniture in an extremely simple and fast way without complicated actions. As a matter of fact, the objects (C) are extracted by pulling the first object (C) which in turn moves the chain (C1, C2, C3) with all the other objects (C) connected to the chain (C1, C2, C3) itself.

Moreover, since the guide means (G1, G2, G3) can extend along any curvilinear direction, the pull-out unit (S1, S2, S3) is extremely versatile and adaptable to any type and shape of piece of furniture and particularly of the space defined inside it.

Further, the presence of the locking means shaped so that they alternatively lock and unlock to sliders (3) adjacent to each other, enables the chain to be flexible when it must follow the trajectory set by the guide means (G1, G2, G3) and to be rigid when it protrudes in cantilevered fashion with respect to the outlet section (2e) of the guide means (G1, G2, G3).

In the same way, it is important to observe that the objects (C) to be connected to the sliders of the chain (C1, C2, C3) can be replaced over the time based on the needs of the user. As an example, it is possible to switch from four garbage containers (as shown in Figures 3 and 4) to a set of different objects (C) possibly in a greater number if these or some of these are smaller than the beforementioned ones, such as for example a set consisting of a dish rack, some bottle holders, book holders, and by a garbage container. In addition, it is also possible to replace many times as desired the order of the objects (C) along the chain (C1, C2, C3).

Further, for example, it is possible to switch from an object (C) for each slider (3) (if said objects (C) have a width equal to or less than the one of said sliders), to a smaller number of wider and distanced objects (C) hooked only to some of the sliders.

It is useful to further observe that, even though the pull-out unit (S1, S2, S3) is shown always mounted to an upper face of the bottom wall (10) of the piece of furniture (M), nothing prevents the possibility of mounting the pull-out unit hung to a lower face of an upper wall of a piece of furniture (M) or also mounted in protruding position to anyone of the lateral walls of the piece of furniture (M).

In that respect, Figures 12A and 12B show, in an exemplifying way and in installed conditions, a system (75) provided with a pair of side-by-side pull-out units (S1), each of them comprises guide means (G1) mounted inside a space (V) defined by a containment body, such as a case or an overhead stowage volume, the open chains (C1) thereof and the objects (C) thereof engaged to the chains (C1) are vertically movable. The objects (C) are engaged to the chains in order to couple them. Substantially, the movement of the chains and of the objects of the system (75) in the Figures 12A and 12B, can be substantially of a "rolling shutter" type. In this case, the plane on which the trajectory defined by the guide means (G1) lies develops parallel to a vertical wall of the space and consequently can be a vertical plane. In addition, the outlet section (2e) of the guide means can be arranged at the free edge (10a) of the horizontal wall delimiting an access opening to the space (V) housing the guide means. Figure 12C shows a system provided with a pair of pull-out units (S1) mounted inside a space formed in the floor; the operation is analogous to what was described with reference to Figures 12A and 12B, except for the height at which the pull-out units are located and for the movement of the open chains (C1) which, even though it is still vertical, in the embodiment of Figure 12C the movement is upwards (while the chains of the embodiment in Figures 12A and 12B move downwards) in order for the objects to be made accessible outside the space and thus make the system take on its operating position.

Clearly, the pull-out unit (S1, S2, S3) can be also mounted in inclined walls and the guide means can develop along a curvilinear trajectory lying on an inclined plane.

It is important moreover to observe that despite the fact that until now it was always assumed that this pull-out unit should be mounted in a corner kitchen piece of furniture (M), nothing prevents the inventive idea, on which this invention is based, to be advantageously used, without falling out from the same inventive idea, also in different structures, which comprise any containment body (to this matter, see the respective definition).

This intends to mean that if the beforehand cited typical inventive idea consists of devising a pull-out unit having curvilinear (or following a broken line) guide means (G1, G2, G3) enabling to exploit spaces or volumes that are difficult to access, therefore it is apparent that a similar pull-out unit can be mounted also to vertical walls, ceilings, or base walls of spaces or volumes that are difficult to access of yachts, campers, airplanes, or similar. Moreover, the invention enables to exploit volumes for obtaining "concealed" warehouses or to exploit spaces in a vehicle. Preferably, due to the provision of guide means having an open trajectory, also the chain follows a path having an open trajectory at least partially broken or curvilinear, in which the broken or curvilinear portion of the open trajectory path of the chain is defined by the guide means inside the containment body (therefore, such portion of the path is followed by the chain, in installed conditions of the pull-out unit, inside the containment body, for example the piece of furniture (M), which the pull-out unit is installed in); when the chain protrudes from the free edge of the containment body or of the wall thereof, it can protrude by following any trajectory (the chain is projected by the outlet section, which defines at least the initial section of the trajectory) and in any way (for example by auxiliary guide means which will be described in the following, which enable to follow a determined trajectory).

Moreover, said pull-out unit (S1, S2, S3) can be also mounted in a closet, or also simply on a shelf cantileveredly mounted to a masonry wall.

Moreover, in a piece of furniture or in a volume that is difficult to access a plurality of pull-out units (S1, S2, S3) can be mounted at different heights, all of them provided with chains (C1, C2, C3) independently from each other.

In an exemplary way:
- on the bottom of the piece of furniture, a lower pull-out unit (S1, S2, S3) with associated objects (C) can be mounted,
- on a shelf at an intermediate height of the piece of furniture one or plural intermediate pull-out units (S1, S2, S3) can be mounted;
- on the upper wall of the piece of furniture (M) an upper pull-out unit (S1, S2, S3) can be mounted.

Alternatively, the chains (C1, C2, C3) of two or more pull-out units (S1, S2, S3) can be also coupled to each other so that they all support the objects (C). This solution is extremely indicated if the objects (C) are very heavy or have a substantial vertical extension. In this case, the chains (C1, C2, C3) are connected to each other by the objects (C) themselves. Consequently a user, by pulling towards himself/herself the first object (C), will have a simultaneous extraction of all the chains (C1, C2, C3) connected to each other by the objects (C) themselves.

Importantly, it is further observed that in a particular embodiment of the invention, to the pull-out unit (S1, S2, S3) can be also associated auxiliary guide means, which can have a rectilinear, broken, or curvilinear shape, in which the sliders (3) protruding from the outlet section (2e) of the guide means (G1, G2, G3) slide and station. Such solution is particularly suitable when the overall load of the protruding sliders (3) with their objects (C) is so high that it cannot be supported by the slider (3) or sliders (3) which stations/station in the guide means (G1, G2, G3) or if the sliders are not of the supporting type. Therefore, such auxiliary guide means (G1, G2, G3) substantially act as an abutment and support for the protruding sliders (3) so that the overall load (of the protruding sliders (3) with the associated connected objects (C)) does not completely weigh on the sliders (3) stationing in the guide means (G1, G2, G3). The auxiliary guide means can further cause the chain to follow a broken trajectory, wherein a first rectilinear section can be set by the outlet section (2e) and wherein a second rectilinear section, transversal to the first rectilinear section, can be set by the auxiliary guide means.

Said auxiliary guide means can be associated to the door of the piece of furniture or to specific mechanisms actuatable by the first slider (3) of the chain (C1, C2, C3) when this latter travels in correspondence of the outlet section (2e).

Said auxiliary guide means, by the movement of the door of the piece of furniture or by actuating the beforehand cited specific mechanisms can be positioned in:
- a first position wherein said auxiliary guide means are not aligned with the outlet section (2e) of the guide means (G1, G2, G3); and
- a second position, wherein said auxiliary guide means are aligned and/or located adjacent the outlet section (2e) of the guide means (G1, G2, G3) in order to guide and support the sliders (3) protruding from the beforehand cited outlet section (2e).

It is noted that the rolling means instead of comprising said idle wheels (71a, 71b, 72a, 72b, 73) can be replaced by balls.

In another embodiment, the idle wheels and the balls can be absent, in this case the sliders will slide along the guide means (G1, G2, G3) only by a shape coupling.

The invention also relates to an assembly (100) comprising a containment body defining a space (V) and a pull-out unit (S1, S2, S3) of the beforehand cited type; examples of assemblies are shown in Figures from 1 to 4 and from 12A to 12C. In the conditions of installation of the pull-out unit, wherein the pull-out unit is associated to the containment body, the guide means (G1, G2, G3) are preferably engaged completely inside the containment body (i.e. in the space) and the outlet section (2e) is positioned in proximity of or at a free edge (10a) of the containment body. In the idle position of the chain, which corresponds to an idle position of the pull-out unit, all the sliders (3) do not protrude from the space (V) (because they are retracted from the outlet section) and in the operating position of the chain corresponding to the operating position of the pull-out unit, at least one of said sliders (3) protrudes from the outlet section (2e) of the space (V) and therefore from the containment body.

Moreover, the invention refers to a process of installing a pull-out unit (S1, S2, S3) comprising at least the step of installing a pull-out unit (S1, S2, S3) according to what was beforehand described in a space (V) of a containment body. The containment body can be a piece of furniture (M) or a structure of the beforehand described type or any other type of containment body defining a space (V). The process provides to engage the guide means (G1, G2, G3) inside the containment body so that the outlet section (2e) is positioned in proximity of or at a free edge (10a) of the containment body; preferably, this latter step can provide to arrange the outlet section, preferably the terminal end (2e), of the guide means (G1, G2, G3) substantially flush with said free edge (10a). By suitable provisions, the installation process takes into account the limits and spatial and/or structural constrains of the containment body which the pull-out unit (S1, S2, S3) is installed in, in order to maximize the use of the volume of the space (V).

From the point of view of the materials, the components of the pull-out unit (the chain and the guide means, for example) can be made of any material suitable for the purpose. Suitable materials for manufacturing the pull-out units are metal materials for example, which are apt to provide the pull-out unit with the required strength; in other embodiments, plastic and/or polymeric materials can be used. For example, in a possible embodiment, the chain can be of a monolithic plastic material and can have sliders, among which are defined flexible portions apt to cause the chain to follow a curvilinear or broken trajectory.

### Further features of the invention

In preferred embodiments of the invention such the ones illustrated in the attached figures, the pull-out unit (S1, S2, S3) does not comprise any motor for moving the chain (C1, C2, C3) and the objects (C) and the movement of the objects can be therefore substantially of a manual type; it is understood that, in other embodiments, one or more motors for such movement can be provided.

In addition, or as an alternative to the features of the preceding paragraph, in preferred embodiments of the invention such the ones illustrated in the attached figures, each pull-out unit (S1, S2, S3) comprises just one chain (C1, C2, C3) for moving the objects (C); it is understood that, in other embodiments, each pull-out unit can comprise a plurality of chains for enabling such movement.

In addition or as an alternative to the features of the last two preceding paragraphs, in preferred embodiments of the invention such the ones illustrated in the attached figures, each pull-out unit (S1, S2, S3) provides that the curvilinear or broken portion of its trajectory is not defined in proximity of or in correspondence of a wheel, for example of one wheel apt to rotate the chain; it is understood that, in other embodiments, a wheel, for example for rotating the chain, can be provided.

### Further notes and advantages of the invention with reference to the prior art

As it is shown, the invention enables to better exploit the volume provided in spaces that are difficult to access, enabling to use it for storing and extracting, when desired, objects (C).

The dimensions of the pull-out unit (S1, S2, S3) can vary as a function of the containment body in which it is destined to be installed. Consequently, the dimensions of the pull-out unit are advantageously devised, optimized and implemented according to an available volume in a space (V), in order to better exploit it or anyway in a way instrumental to a specific application. It is understood that the pull-out unit according to the invention, the assembly and the associated system can have different dimensions among the many embodiments; substantially, the invention can be embodied according to dimensional scales which can be different from each other, in particular in terms of order of magnitude. For example, in case of an implementation of the invention for a piece of furniture (M), such as a kitchen piece of furniture, the pull-out unit will have dimensions according to the volume of the space (V) of such piece of furniture (dimensions forming a volume in the order of m²), while in the case of an embodiment of the invention for making a "concealed" warehouse in an industrial environment, the pull-out unit(s) could have greater dimensions (dimensions forming a volume in the order of tens of m² or greater, for example), compatible with the objects to be stored, the capacity of the warehouse to be implemented, and the available volume. Further, in possible embodiments which provide the implementation of a pull-out unit in an available space (V) in a vehicle, for example a car or a truck or a coach or any other type of vehicle having at least one volume which can be used for storing/extracting object, the pull-out unit can have limited dimensions, for example less than the ones of embodiments destined to be applied in a piece of furniture or to implement a warehouse (for example, dimensions forming a volume in the order of cm²).

Many particular changes and variations at the reach of a person skilled in the art, falling anyway within the scope of the invention expressed by the attached claims, can be introduced to the present embodiments of the invention.

## Claims

1. Pull-out unit (S1, S2, S3) for pulling objects (C) out from at least one space (V) that is difficult to access, said pull-out unit (S1, S2, S3) being suitable for being connected to a wall (10), in particular to a wall (10) delimiting the space (V), and comprising:
- guide means (G1, G2, G3) configured to be fixed to the wall (10);
- sliding support means slidingly connected to the guide means (G1, G2, G3) and suitable for supporting the objects (C);
the guide means (G1, G2, G3) being configured for guiding a sliding of the sliding support means,
- said guide means (G1, G2, G3) develop along an open trajectory, the open trajectory being a broken or curvilinear trajectory;
- said guide means (G1, G2, G3) comprise an outlet section (2e) destined to be positioned in proximity of or at a free edge (10a) of the wall (10), preferably the outlet section (2e) being defined at a terminal end of the guide means (G1, G2, G3);
- said sliding support means comprise a chain having an open shape (C1, C2, C3) and comprising a set of sliders (3) that are connected to each other and are slidingly mounted on the guide means (G1, G2, G3);
- said chain (C1, C2, C3) is configured for being alternately disposed in an idle position, wherein all sliders (3) do not protrude from the outlet section (2e) of the guide means (G1, G2, G3), and in an operating position, wherein at least one slider (3) protrudes from the outlet section (2e)
**characterised in that**, the outlet section comprises a terminal end (2e) of the guide means (G1, G2, G3) and said guide means (G1, G2, G3) comprise a housing portion (2) configured to define a housing configured for containing the sliders (3) that station or slide inside said housing, and to prevent the sliders (3) from moving along different directions with respect to the direction imposed by the housing portion (2); said housing portion (2) ends with said terminal end (2e) of the guide means (G1, G2, G3).

2. The pull-out unit (S1, S2, S3) of claim 1, wherein said sliders (3) and said guide means (G1, G2, G3) are configured in such a way that, when said chain (C1, C2, C3) is in operating position, the one or more sliders (3) that protrude from the outlet section (2e) are supported in protruding position by the slider or the sliders (3) that stations/station in the guide means (G1, G2, G3).

3. The pull-out unit (S1, S2, S3) of claim 1 or 2, wherein said chain (C1, C2, C3) comprises articulated joining means (4) that revolvingly connect two sliders (3) in adjacent position.

4. The pull-out unit (S1, S2, S3) according to any one the preceding claims, wherein said housing portion (2) comprises a first section (2a) and a second section (2b) disposed in inclined position.

5. The pull-out unit (S1, S2, S3) of claim 4, wherein said guide means (G1, G2, G3) comprise a stationing portion (6) connected to the housing portion (2), in proximity of or at an inlet section of the housing portion (2), said inlet section being opposite to the outlet section (2e).

6. The pull-out unit (S1, S2, S3) according to any one of the preceding claims, comprising rolling means (71a, 71b, 72a, 72b, 73, 74) suitable for facilitating the sliding of the chain (C1, C2, C3) along the guide means (G1, G2, G3).

7. The pull-out unit (S1, S2) of claim 6, wherein said rolling means (71a, 71b, 72a, 72b) are connected to the chain (C1, C2).

8. The pull-out unit (S3) of claim 6, wherein said rolling means (73, 74) are connected to the guide means (G3).

9. The pull-out unit (S1, S2, S3) according to any one of the preceding claims, comprising locking means (B) configured for:
- keeping two adjacent sliders (3) of the chain (C1, C2, C3) locked and aligned when at least one of the two adjacent sliders (3) protrudes from the outlet section (2e) of the guide means (G1, G2, G3);
- keeping the two adjacent sliders (3) of the chain (C1, C2, C3) unlocked when the two sliders (3) are retracted with respect to the output section (2e) so as to allow the relative movement between the two sliders (3).

10. The pull-out unit (S1, S2, S3) of claim 9, wherein said locking means (B) comprise a striker (50) that is connected to one of the two sliders (3) with the possibility of moving up and down, and is provided with a retention tooth (51) suitable for being inserted into a recess (N) integral with the adjacent slider (3); said striker (50) being capable of sliding up and down between:
- a first position, wherein said retention tooth (51) of the striker (50) is inserted into said recess (N), preventing the relative movement between the two adjacent sliders (3) of the chain (C1, C2, C3); and
- a second position, wherein said retention tooth (51) of the striker (50) is disengaged from said recess (N), permitting the relative movement between the two adjacent sliders (3) of the chain (C1, C2, C3);
wherein said guide means (G1, G2, G3) comprise a reference surface (R2) against which the striker (50) strikes and that keeps the striker (50) in its second position.

11. The pull-out unit (S1, S2) according to any one of claims 3 to 10, wherein each slider (3) of the chain (C1, C2) comprises a first end (31) and a second end (32), each one comprising at least one eyelet (31a, 31b, 32a, 32b, 311, 321) with a hole; said at least one eyelet (31a, 31b; 311) of the first end (31) and said at least one eyelet (32a, 32b, 321) lie in two staggered parallel planes; wherein said articulated joining means (4) comprise a pin (40) inserted in the eyelets (31a, 31b, 32a, 32b, 311, 321) of the two adjacent sliders (3).

12. The pull-out unit (S3) according to any one of claims 3 to 10, wherein each slider (3) of the chain (C3) comprises or consists in a section and comprises a first side (33a), a second side (33b) opposite to said first side (33a), an internal side (33c), an external side (33d), an upper side (33e) and a lower side (33f); each slider (3) comprising at least one sleeve (33m) disposed at the corner defined by the first side (33a) with the internal side (33c), and at least one sleeve (33n) disposed at the corner defined by the second side (33b) with the internal side (33c); said articulated joining means (4) comprise a bar (43) inserted into the sleeves (33m, 33n) of two adjacent sliders (3).

13. The pull-out unit (S1, S2, S3) according to any one of the preceding claims, further comprising connection means for connecting the objects (C) to the sliding support means, in particular said connection means being configured for connecting one of said objects (C) to only one slider (3).

14. System (75) comprising at least two pull-out units (S1, S2, S3) according to any one of the preceding claims, optionally disposed one above the other or side-by-side, wherein the respective chains (C1, C2, C3) are coupled together by means of the objects (C) connected to the chains (C1, C2, C3) of the pull-out units (S1, S2, S3).

15. Assembly (100) comprising:
- a containment body, for example a piece of furniture (M), an attic, a storage room, an air shaft, the containment body defining a space (V) and comprising at least one wall,
- a pull-out unit (S1, S2, S3) according to any of claims from 1 to 13, the guide means (G1, G2, G3) being engaged inside the containment body at said at least one wall of the containment body and the outlet section (2e) being positioned in proximity of or at a free edge (10a) of the containment body,
wherein in the idle position all sliders (3) do not protrude from the space (V) and in the operating position at least one slider (3), in particular some sliders (3), protrude from the outlet section (2e) and hence from the containment body.

16. Assembly according to claim 15, wherein:
- the containment body is a piece of furniture (M) comprising at least one wall (10);
- the pull-out unit (S1, S2, S3) is connected to said wall (10).

17. Assembly according to claim 16, wherein the piece of furniture (M) is a piece of furniture for a kitchen.

18. Corner piece of furniture (M) provided with an opening (A) disposed in off-centered position, comprising:
- at least one pull-out unit (S1, S2, S3) according to any one of claims 1 to 13; or
- a system according to claim 14.

19. Corner piece of furniture according to claim 18, wherein the corner piece of furniture is for a kitchen.

20. Process for installing a pull-out unit comprising at least the step of installing a pull-out unit (S1, S2, S3) according to any of claims from 1 to 13 in a space (V) of a containment body, for example in a space (V) defined by a piece of furniture (M) or by an attic or a storage room or an air shaft.

21. Process according to claim 20, wherein the step of installing a pull-out unit (S1, S2, S3) in a space (V) of a containment body comprises the steps of:
- engaging the guide means (G1, G2, G3) inside the containment body, in particular to a wall (10) delimiting the space (V),
- positioning the outlet section (2e) in proximity of or at a free edge (10a) of the containment body, preferably said step comprising arranging the outlet section (2e), preferably the terminal end, of the guide means (G1, G2, G3) substantially flush with said free edge (10a).

## Patentansprüche

1. Auszieheinheit (S1, S2, S3) zum Herausziehen von Gegenständen (C) aus mindestens einem schwer zugänglichen Raum (V), wobei die Auszieheinheit (S1, S2, S3) geeignet ist, mit einer Wand (10), insbesondere mit einer den Raum (V) begrenzenden Wand (10), verbunden zu werden, und umfassend:
- Führungsmittel (G1, G2, G3), die so konfiguriert sind, dass sie an der Wand (10) befestigt werden können;
- gleitende Stützmittel, die gleitend mit den Führungsmitteln (G1, G2, G3) verbunden sind und zum Stützen der Gegenstände (C) geeignet sind;
die Führungsmittel (G1, G2, G3) so konfiguriert sind, dass sie ein Gleiten der gleitenden Stützmittel führen,
- die Führungsmittel (G1, G2, G3) sich entlang einer offenen Trajektorie entwickeln, wobei die offene Trajektorie eine gebrochene oder gekrümmte Trajektorie ist;
- die Führungsmittel (G1, G2, G3) einen Auslassabschnitt (2e) umfassen, der dazu bestimmt ist, in der Nähe von oder an einem freien Rand (10a) der Wand (10) positioniert zu werden, wobei der Auslassabschnitt (2e) vorzugsweise an einem Schlussende der Führungsmittel (G1, G2, G3) definiert ist;
- die gleitenden Stützmittel eine Kette umfassen, die eine offene Form (C1, C2, C3) aufweist und einen Satz von Gleitern (3) einstellt, die miteinander verbunden sind und gleitend auf den Führungsmitteln (G1, G2, G3) montiert sind;
- die Kette (C1, C2, C3) so konfiguriert ist, dass sie abwechselnd in einer Ruheposition, wobei alle Gleiter (3) nicht aus dem Auslassabschnitt (2e) der Führungsmittel (G1, G2, G3) herausragen, und in einer Betriebsposition angeordnet ist, wobei mindestens ein Gleiter (3) aus dem Auslassabschnitt (2e) herausragt
**dadurch gekennzeichnet, dass** der Auslassabschnitt ein Schlussende (2e) der Führungsmittel (G1, G2, G3) umfasst und die Führungsmittel (G1, G2, G3) einen Gehäuseabschnitt (2) umfassen, der so konfiguriert ist, dass er ein Gehäuse definiert, das so konfiguriert ist, dass es die Gleiter (3) aufnimmt, die sich innerhalb des Gehäuses bewegen oder gleiten, und dass es die Gleiter (3) daran hindert, sich entlang verschiedener Richtungen in Bezug auf die durch den Gehäuseabschnitt (2) vorgegebene Richtung zu bewegen; der Gehäuseabschnitt (2) mit dem Schlussende (2e) der Führungsmittel (G1, G2, G3) endet.

2. Auszieheinheit (S1, S2, S3) nach Anspruch 1, wobei die Gleiter (3) und die Führungsmittel (G1, G2, G3) so konfiguriert sind, dass, wenn sich die Kette (C1, C2, C3) in der Betriebsposition befindet, der eine oder die mehreren Gleiter (3), die aus dem Auslassabschnitt (2e) herausragen, in der herausragenden Position durch den oder die Gleiter (3) gestützt werden, die in den Führungsmitteln (G1, G2, G3) positioniert sind.

3. Auszieheinheit (S1, S2, S3) nach Anspruch 1 oder 2, wobei die Kette (C1, C2, C3) gelenkige Verbindungsmittel (4) umfasst, die zwei Gleiter (3) in benachbarter Position drehbar miteinander verbinden.

4. Auszieheinheit (S1, S2, S3) nach einem der vorstehenden Ansprüche, wobei der Gehäuseabschnitt (2) einen ersten Abschnitt (2a) und einen zweiten Abschnitt (2b) umfasst, die in geneigter Position angeordnet sind.

5. Auszieheinheit (S1, S2, S3) nach Anspruch 4, wobei die Führungsmittel (G1, G2, G3) einen mit dem Gehäuseabschnitt (2) verbundenen Stationierungsabschnitt (6) in der Nähe von oder an einem Einlassabschnitt des Gehäuseabschnitts (2) umfassen, wobei der Einlassabschnitt dem Auslassabschnitt (2e) gegenüberliegt.

6. Auszieheinheit (S1, S2, S3) nach einem der vorstehenden Ansprüche, umfassend Rollmittel (71a, 71b, 72a, 72b, 73, 74), die geeignet sind, das Gleiten der Kette (C1, C2, C3) entlang der Führungsmittel (G1, G2, G3) zu erleichtern.

7. Auszieheinheit (S1, S2) nach Anspruch 6, wobei die Rollmittel (71a, 71b, 72a, 72b) mit der Kette (C1, C2) verbunden sind.

8. Auszieheinheit (S3) nach Anspruch 6, wobei die Rollmittel (73, 74) mit den Führungsmitteln (G3) verbunden sind.

9. Auszieheinheit (S1, S2, S3) nach einem der vorstehenden Ansprüche, umfassend Verriegelungsmittel (B), konfiguriert zum:
- Halten zweier benachbarter Gleiter (3) der Kette (C1, C2, C3) verriegelt und ausgerichtet, wenn mindestens einer der beiden benachbarten Gleiter (3) aus dem Auslassabschnitt (2e) des Führungsmittels (G1, G2, G3) herausragt;
- Halten der beiden benachbarten Gleiter (3) der Kette (C1, C2, C3) entriegelt, wenn die beiden Gleiter (3) in Bezug auf den Ausgabeabschnitt (2e) zurückgezogen werden, um die relative Bewegung zwischen den beiden Gleitern (3) zu ermöglichen.

10. Auszieheinheit (S1, S2, S3) nach Anspruch 9, wobei die Verriegelungsmittel (B) einen Anschlag (50) umfassen, der mit einem der beiden Gleiter (3) verbunden ist und sich nach oben und unten bewegen kann und mit einem Haltezahn (51) versehen ist, der in eine Vertiefung (N) eingesetzt werden kann, die mit dem benachbarten Gleiter (3) verbunden ist; wobei der Anschlag (50) auf und ab zwischen Folgenden gleiten kann:
- einer ersten Position, wobei der Haltezahn (51) des Anschlags (50) in die Vertiefung (N) eingesetzt ist und die relative Bewegung zwischen den beiden benachbarten Gleitern (3) der Kette (C1, C2, C3) verhindert; und
- einer zweiten Position, wobei der Haltezahn (51) des Anschlags (50) aus der Vertiefung (N) ausgerückt ist und die relative Bewegung zwischen den beiden benachbarten Gleitern (3) der Kette (C1, C2, C3) zulässt;
wobei die Führungsmittel (G1, G2, G3) eine Bezugsoberfläche (R2) umfassen, gegen die der Anschlag (50) anschlägt und die den Anschlag (50) in seiner zweiten Position hält.

11. Auszieheinheit (S1, S2) nach einem der Ansprüche 3 bis 10, wobei jeder Gleiter (3) der Kette (C1, C2) ein erstes Ende (31) und ein zweites Ende (32) umfasst, von denen jedes mindestens eine Öse (31a, 31b, 32a, 32b, 311, 321) mit einem Loch umfasst; die mindestens eine Öse (31a, 31b; 311) des ersten Endes (31) und die mindestens eine Öse (32a, 32b, 321) in zwei zueinander versetzten parallelen Ebenen liegen; wobei die gelenkigen Verbindungsmittel (4) einen Stift (40) umfassen, der in die Ösen (31a, 31b, 32a, 32b, 311, 321) der beiden benachbarten Gleiter (3) eingesetzt ist.

12. Auszieheinheit (S3) nach einem der Ansprüche 3 bis 10, wobei jeder Gleiter (3) der Kette (C3) einen Abschnitt umfasst oder aus einem solchen besteht und eine erste Seite (33a), eine zweite Seite (33b) gegenüber der ersten Seite (33a), eine Innenseite (33c), eine Außenseite (33d), eine Oberseite (33e) und eine Unterseite (33f) umfasst; jeder Gleiter (3) mindestens eine Hülse (33m) umfasst, die an der von der ersten Seite (33a) mit der Innenseite (33c) definierten Ecke angeordnet ist, und mindestens eine Hülse (33n), die an der von der zweiten Seite (33b) mit der Innenseite (33c) definierten Ecke angeordnet ist; die gelenkigen Verbindungsmittel (4) eine Stange (43) umfassen, die in die Hülsen (33m, 33n) zweier benachbarter Gleiter (3) eingesetzt ist.

13. Auszieheinheit (S1, S2, S3) nach einem der vorstehenden Ansprüche, ferner umfassend Verbindungsmittel zum Verbinden der Gegenstände (C) mit den gleitenden Stützmitteln, wobei die Verbindungsmittel so konfiguriert sind, dass sie einen der Gegenstände (C) mit nur einem Gleiter (3) verbinden.

14. System (75), umfassend mindestens zwei Auszieheinheiten (S1, S2, S3) nach einem der vorstehenden Ansprüche, die optional übereinander oder nebeneinander angeordnet sind, wobei die jeweiligen Ketten (C1, C2, C3) mittels der mit den Ketten (C1, C2, C3) der Auszieheinheiten (S1, S2, S3) verbundenen Gegenstände (C) miteinander verbunden sind.

15. Baugruppe (100), umfassend:
- einen Behälterkörper, zum Beispiel ein Möbelstück (M), einen Dachboden, ein Lagerraum, einen Luftschacht, wobei der Behälterkörper einen Raum (V) definiert und mindestens eine Wand umfasst,
- eine Auszieheinheit (S1, S2, S3) nach einem der Ansprüche 1 bis 13, wobei die Führungsmittel (G1, G2, G3) innerhalb des Behälterkörpers an der mindestens einen Wand des Behälterkörpers angreifen und der Auslassabschnitt (2e) in der Nähe von oder an einem freien Rand (10a) des Behälterkörpers positioniert ist,
wobei in der Ruheposition alle Gleiter (3) nicht aus dem Raum (V) herausragen und in der Betriebsposition mindestens ein Gleiter (3), insbesondere einige Gleiter (3), aus dem Auslassabschnitt (2e) und damit aus dem Behälterkörper herausragen.

16. Baugruppe nach Anspruch 15, wobei:
- der Behälterkörper ein Möbelstück (M) ist, das mindestens eine Wand (10) umfasst;
- die Auszieheinheit (S1, S2, S3) mit der Wand (10) verbunden ist.

17. Baugruppe nach Anspruch 16, wobei das Möbelstück (M) ein Möbelstück für eine Küche ist.

18. Eckmöbelstück (M), das mit einer außermittig angeordneten Öffnung (A) bereitgestellt ist, umfassend:
- mindestens eine Ausziehvorrichtung (S1, S2, S3) nach einem der Ansprüche 1 bis 13, oder
- ein System nach Anspruch 14.

19. Eckmöbelstück nach Anspruch 18, wobei das Eckmöbelstück für eine Küche bestimmt ist.

20. Prozess zum Installieren einer Auszieheinheit, umfassend mindestens den Schritt des Installierens einer Auszieheinheit (S1, S2, S3) nach einem der Ansprüche 1 bis 13 in einem Raum (V) eines Behälterkörpers, zum Beispiel in einem Raum (V), der durch ein Möbelstück (M) oder durch einen Dachboden oder einen Lagerraum oder einen Luftschacht definiert ist.

21. Prozess nach Anspruch 20, wobei der Schritt des Installierens einer Auszieheinheit (S1, S2, S3) in einem Raum (V) eines Behälterkörpers die folgenden Schritte umfasst:
- Eingreifen der Führungsmittel (G1, G2, G3) im Inneren des Behälterkörpers, insbesondere an einer Wand (10), die den Raum (V) abgrenzt,
- Positionieren des Auslassabschnitts (2e) in der Nähe oder an einem freien Rand (10a) des Behälterkörpers, wobei der Schritt vorzugsweise das Anordnen des Auslassabschnitts (2e), vorzugsweise des Schlussendes, der Führungsmittel (G1, G2, G3) im Wesentlichen bündig mit dem freien Rand (10a) umfasst.

## Revendications

1. Unité d'extraction (S1, S2, S3) permettant d'extraire des objets (C) d'au moins un espace (V) qui est difficile d'accès, ladite unité d'extraction (S1, S2, S3) étant appropriée pour être reliée à une paroi (10), en particulier à une paroi (10) délimitant l'espace (V), et comprenant :
- des moyens de guidage (G1, G2, G3) conçus pour être fixés à la paroi (10) ;
- des moyens de support coulissants reliés de façon coulissante aux moyens de guidage (G1, G2, G3) et appropriés pour supporter les objets (C) ;
les moyens de guidage (G1, G2, G3) étant conçus pour guider un coulissement des moyens de support coulissants,
- lesdits moyens de guidage (G1, G2, G3) se développent le long d'une trajectoire ouverte, la trajectoire ouverte étant une trajectoire discontinue ou curviligne ;
- lesdits moyens de guidage (G1, G2, G3) comprennent une section de sortie (2e) destinée à être positionnée à proximité ou au niveau d'un bord libre (10a) de la paroi (10), de préférence la section de sortie (2e) étant définie au niveau d'une extrémité terminale des moyens de guidage (G1, G2, G3) ;
- lesdits moyens de support coulissants comprennent une chaîne ayant une forme ouverte (C1, C2, C3) et comprenant un ensemble de coulisseaux (3) qui sont reliés les uns aux autres et sont montés de façon coulissante sur les moyens de guidage (G1,G2, G3) ;
- ladite chaîne (C1, C2, C3) est conçue pour être disposée en alternance dans une position de repos, dans laquelle aucun coulisseau (3) ne fait saillie de la section de sortie (2e) des moyens de guidage (G1, G2, G3), et dans une position de fonctionnement, dans laquelle au moins un coulisseau (3) fait saillie de la section de sortie (2e)
**caractérisée en ce que,** la section de sortie comprend une extrémité terminale (2e) des moyens de guidage (G1, G2, G3) et lesdits moyens de guidage (G1, G2, G3) comprennent une partie de logement (2) conçue pour définir un logement conçu pour contenir les coulisseaux (3) qui stationnent ou coulissent à l'intérieur dudit logement, et pour empêcher les coulisseaux (3) de se déplacer le long de directions différentes par rapport à la direction imposée par la partie de logement (2) ; ladite partie de logement (2) se termine avec ladite extrémité terminale (2e) des moyens de guidage (G1, G2, G3).

2. Unité d'extraction (S1, S2, S3) selon la revendication 1, dans laquelle lesdits coulisseaux (3) et lesdits moyens de guidage (G1, G2, G3) sont conçus d'une manière telle que, lorsque ladite chaîne (C1, C2, C3) est en position de fonctionnement, le ou les coulisseaux (3) qui font saillie de la section de sortie (2e) sont supportés dans des positions faisant saillie par le coulisseau ou les coulisseaux (3) qui stationne/stationnent dans les moyens de guidage (G1, G2, G3).

3. Unité d'extraction (S1, S2, S3) selon la revendication 1 ou 2, dans laquelle ladite chaîne (C1, C2, C3) comprend des moyens de jointure articulés (4) qui relient de manière rotative deux coulisseaux (3) en position adjacente.

4. Unité d'extraction (S1, S2, S3) selon l'une quelconque des revendications précédentes, dans laquelle ladite partie de logement (2) comprend une première section (2a) et une seconde section (2b) disposées en position inclinée.

5. Unité d'extraction (S1, S2, S3) selon la revendication 4, dans laquelle lesdits moyens de guidage (G1, G2, G3) comprennent une partie de stationnement (6) reliée à la partie de logement (2), à proximité ou au niveau d'une section d'entrée de la partie de logement (2), ladite section d'entrée étant opposée à la section de sortie (2e).

6. Unité d'extraction (S1, S2, S3) selon l'une quelconque des revendications précédentes, comprenant des moyens de roulement (71a, 71b, 72a, 72b, 73, 74) appropriés pour faciliter le coulissement de la chaîne (C1, C2, C3) le long des moyens de guidage (G1, G2, G3).

7. Unité d'extraction (S1, S2) selon la revendication 6, dans laquelle lesdits moyens de roulement (71a, 71b, 72a, 72b) sont reliés à la chaîne (C1, C2).

8. Unité d'extraction (S3) selon la revendication 6, dans laquelle lesdits moyens de roulement (73, 74) sont reliés aux moyens de guidage (G3).

9. Unité d'extraction (S1, S2, S3) selon l'une quelconque des revendications précédentes, comprenant des moyens de verrouillage (B) conçus pour :
- garder deux coulisseaux (3) adjacents de la chaîne (C1, C2, C3) verrouillés et alignés lorsqu'au moins l'un parmi les deux coulisseaux (3) adjacents fait saillie de la section de sortie (2e) des moyens de guidage (G1, G2, G3) ;
- garder les deux coulisseaux (3) adjacents de la chaîne (C1, C2, C3) déverrouillés lorsque les deux coulisseaux (3) sont rétractés par rapport à la section de sortie (2e) de façon à permettre le mouvement relatif entre les deux coulisseaux (3).

10. Unité d'extraction (S1, S2, S3) selon la revendication 9, dans laquelle lesdits moyens de verrouillage (B) comprennent une gâche (50) qui est reliée à l'un des deux coulisseaux (3) avec la possibilité de déplacement vers le haut et vers le bas, et est pourvue d'une dent de rétention (51) appropriée pour être insérée dans un évidement (N) solidaire du coulisseau (3) adjacent ; ladite gâche (50) étant capable de coulisser vers le haut et vers le bas entre :
- une première position, dans laquelle ladite dent de rétention (51) de la gâche (50) est insérée dans ledit évidement (N), empêchant le mouvement relatif entre les deux coulisseaux (3) adjacents de la chaîne (C1, C2, C3) ; et
- une seconde position, dans laquelle ladite dent de rétention (51) de la gâche (50) est désolidarisée dudit évidement (N), permettant le mouvement relatif entre les deux coulisseaux (3) adjacents de la chaîne (C1, C2, C3) ;
dans laquelle lesdits moyens de guidage (G1, G2, G3) comprennent une surface de référence (R2) contre laquelle la gâche (50) vient frapper et qui garde la gâche (50) dans sa seconde position.

11. Unité d'extraction (S1, S2) selon l'une quelconque des revendications 3 à 10, dans laquelle chaque coulisseau (3) de la chaîne (C1, C2) comprend une première extrémité (31) et une seconde extrémité (32), chacune comprenant au moins un oeillet (31 a, 31 b, 32a, 32b, 311, 321) avec un trou ; ledit au moins un oeillet (31a, 31b ; 311) de la première extrémité (31) et ledit au moins un oeillet (32a, 32b, 321) se trouvent dans deux plans parallèles en quinconce ; dans laquelle lesdits moyens de jointure articulés (4) comprennent une broche (40) insérée dans les oeillets (31a, 31b, 32a, 32b, 311, 321) des deux coulisseaux (3) adjacents.

12. Unité d'extraction (S3) selon l'une quelconque des revendications 3 à 10, dans laquelle chaque coulisseau (3) de la chaîne (C3) comprend ou consiste en une section et comprend un premier côté (33a), un second côté (33b) opposé audit premier côté (33a), un côté interne (33c), un côté externe (33d), un côté supérieur (33e) et un côté inférieur (33f) ; chaque coulisseau (3) comprenant au moins un manchon (33m) disposé au niveau du coin défini par le premier côté (33a) avec le côté interne (33c), et au moins un manchon (33n) disposé au niveau du coin défini par le second côté (33b) avec le côté interne (33c) ; lesdits moyens de jointure articulés (4) comprennent une barre (43) insérée dans les manchons (33m, 33n) de deux coulisseaux (3) adjacents.

13. Unité d'extraction (S1, S2, S3) selon l'une quelconque des revendications précédentes, comprenant en outre des moyens de liaison permettant de relier les objets (C) aux moyens de support coulissants, en particulier lesdits moyens de liaison étant conçus pour relier l'un desdits objets (C) à un seul coulisseau (3).

14. Système (75) comprenant au moins deux unités d'extraction (S1, S2, S3) selon l'une quelconque des revendications précédentes, facultativement disposées l'une au-dessus de l'autre ou côte à côte, dans lequel les chaînes (C1, C2, C3) respectives sont accouplées ensemble au moyen des objets (C) reliés aux chaînes (C1, C2, C3) des unités d'extraction (S1, S2, S3).

15. Ensemble (100) comprenant :
- un corps de confinement, par exemple une pièce de mobilier (M), un grenier, un local de stockage, un conduit d'aération, le corps de confinement définissant un espace (V) et comprenant au moins une paroi,
- une unité d'extraction (S1, S2, S3) selon l'une quelconque des revendications allant de 1 à 13, les moyens de guidage (G1, G2, G3) étant en prise à l'intérieur du corps de confinement au niveau de ladite au moins une paroi du corps de confinement et la section de sortie (2e) étant positionnée à proximité ou au niveau d'un bord libre (10a) du corps de confinement,
dans lequel dans la position de repos aucun coulisseau (3) ne fait saillie de l'espace (V) et dans la position de fonctionnement au moins un coulisseau (3), en particulier quelques coulisseaux (3), font saillie de la section de sortie (2e) et en conséquence, du corps de confinement.

16. Ensemble selon la revendication 15, dans lequel :
- le corps de confinement est une pièce de mobilier (M) comprenant au moins une paroi (10) ;
- l'unité d'extraction (S1, S2, S3) est reliée à ladite paroi (10).

17. Ensemble selon la revendication 16, dans lequel la pièce de mobilier (M) est une pièce de mobilier pour une cuisine.

18. Pièce de mobilier de coin (M) pourvue d'une ouverture (A) disposée en position décentrée, comprenant :
- au moins une unité d'extraction (S1, S2, S3) selon l'une quelconque des revendications 1 à 13 ; ou
- un système selon la revendication 14.

19. Pièce de mobilier de coin selon la revendication 18, dans lequel la pièce de mobilier de coin est destinée à une cuisine.

20. Procédé permettant d'installer une unité d'extraction comprenant au moins l'étape d'installation d'une unité d'extraction (S1, S2, S3) selon l'une quelconque des revendications allant de 1 à 13 dans un espace (V) d'un corps de confinement, par exemple dans un espace (V) défini par une pièce de mobilier (M) ou par un grenier ou un local de stockage ou un conduit d'aération.

21. Procédé selon la revendication 20, dans lequel l'étape d'installation d'une unité d'extraction (S1, S2, S3) dans un espace (V) d'un corps de confinement comprend les étapes consistant à :
- mettre en prise les moyens de guidage (G1, G2, G3) à l'intérieur du corps de confinement, en particulier avec une paroi (10) délimitant l'espace (V),
- positionner la section de sortie (2e) à proximité ou au niveau d'un bord libre (10a) du corps de confinement, de préférence ladite étape comprenant l'agencement de la section de sortie (2e), de préférence l'extrémité terminale, des moyens de guidage (G1, G2, G3) sensiblement affleurante audit bord libre (10a).
